# EUROPEAN PATENT APPLICATION

(11) **EP 4 080 778 A1**
(43) Date of publication of application: **26.10.2022**
(21) Application number: 20905904.7
(22) Date of filing: 22.10.2020
(51) Int. Cl.: H04B 7/0413

(54) **BASE STATION, AND MULTI-ANTENNA TRANSCEIVER AND CONTROL METHOD THEREFOR**

(30) Priority: 27.12.2019 CN 201911378945
(71) Applicant: ZTE Corporation, Shenzhen, Guangdong 518057 (CN)
(72) Inventor: ZHANG, Yalong, Shenzhen, Guangdong 518057 (CN); FU, Can, Shenzhen, Guangdong 518057 (CN)
(74) Representative: WBH Wachenhausen Patentanwälte PartG mbB
(86) International application number: PCT/CN2020/123020
(87) International publication number: WO 2021/129098

(57) **Abstract**

A base station, and a multi-antenna transceiver and a control method therefor. In the transceiver, an IQ exchange module (10) receives a first correction signal and sends same or receives a second correction signal and sends same to a DSP (50); a digital medium frequency processing module (20) receives the first correction signal and sends same to a downlink service channel, or receives the second correction signal from an uplink service channel and sends same to the IQ exchange module (10); an interface relation module (30) couples the first correction signal from the downlink service channel to an antenna correction link (40) and sends same to the DSP (50), or couples the second correction signal from the antenna correction link (40) to the uplink service channel; the DSP (50) sends the first correction signal and the second correction signal, and calculates a first correction coefficient and a second correction coefficient according to the received first correction signal and second correction signal.

## Description

### CROSS-REFERENCE TO RELATED APPLICATION

This application is filed on the basis of Chinese patent application No. 201911378945.6 filed on December 27, 2019, and claims priority to the Chinese patent application, the entire contents of which are incorporated herein by reference.

### TECHNICAL FIELD

Embodiments of the present invention relate to, but are not limited to, the field of communication technologies, and more particularly, to a base station, a multi-antenna transceiver, a control method of the multi-antenna transceiver and a computer-readable storage medium.

### BACKGROUND

A multi-antenna technology is mainly used in beam-forming base stations and Multi-Input Multi-Output (MIMO) base stations. A multi-antenna base station plays an important role in increasing frequency spectrum utilization, base station user capacity and user communication rate. However, normal operation of multiple antennas requires the consistency of amplitude and phase between antenna channels. In order to meet this pre-condition, an antenna correction technology is introduced into the existing multi-antenna base station.

At present, an antenna correction device of the multi-antenna base station mainly includes a Baseband Processing Unit (BBU), an In-phase/Quadrature (IQ) switch module and a digital intermediate-frequency processing module, a service channel, an interface relation module, a duplexer and an antenna of each antenna channel. An antenna correction function is to align amplitude and phase characteristics of the intermediate-frequency processing modules, the service channels, the interface relation modules, the duplexers and the antennas between different antenna channels after IQ switch. During antenna channel downlink correction, a correction signal is sent from the BBU. The correction signal passes through the IQ switch module, and then enters the digital intermediate-frequency processing module, the downlink service channel, the interface relation module and the duplexer of each antenna channel to the antenna. After that, the correction signal is coupled by the antenna into an antenna correction link and passes through the IQ switch module. Then, the correction signal passing through a downlink is sent back to the BBU. The BBU calculates a downlink correction weight of the antenna channel according to the correction signal passing through the downlink. During antenna channel uplink correction, a correction signal is sent from the BBU, passes through the IQ switch module and the antenna correction link to arrive at the antenna, and then arrives at the IQ switch module from the antenna through a duplexer, a radio-frequency interface, an uplink service channel and a digital intermediate-frequency processing module. Finally, the IQ switch module sends the correction signal passing through the uplink back to the BBU. The BBU calculates an uplink correction weight of the antenna channel according to the correction signal passing through the uplink.

As can be seen, during antenna correction, an original correction signal is sent from and a correction weight is calculated by the BBU, and the correction signal and the antenna correction link are coupled at the antenna. As a result, the whole link of the antenna correction signal may run from the BBU to the antenna, not only resulting in a long link, but also involving the BBU, a transceiver module TRX and other section modules in different fields. Development and debugging of antenna correction functions require collaboration across multiple fields and sections, which not only is inefficient and prone to failure, but also takes up a lot of transmission resources of carrier signals and baseband.

### SUMMARY

The following is an overview of the subject matters described in detail herein. This overview is not intended to limit the protection scope of claims.

Embodiments of the present invention provide a base station, a multi-antenna transceiver, a control method of the multi-antenna transceiver and a computer-readable storage medium.

In accordance with an aspect of the present invention, a multi-antenna transceiver is provided, including an IQ switch module, a digital intermediate-frequency processing module, an interface relation module, an antenna correction link and a digital signal processor (DSP). The DSP is configured to generate a first correction signal and send the first correction signal to the IQ switch module. The IQ switch module is configured to send the received first correction signal to the digital intermediate-frequency processing module of an antenna channel. The digital intermediate-frequency processing module is configured to send the received first correction signal to a downlink service channel. The interface relation module is configured to couple the first correction signal from the downlink service channel into the antenna correction link. The antenna correction link is configured to send the received first correction signal to the DSP. The DSP is configured to calculate a first correction coefficient according to the received first correction signal and send the first correction coefficient to the IQ switch module. The IQ switch module sends the first correction coefficient to a BBU. Alternatively, the DSP is further configured to generate a second correction signal and send the second correction signal to the antenna correction link. The antenna correction link is further configured to send the received second correction signal to the interface relation module of the antenna channel. The interface relation module is further configured to couple the received second correction signal into an uplink service channel. The digital intermediate-frequency processing module is further configured to receive the second correction signal from the uplink service channel and send the second correction signal to the IQ switch module. The IQ switch module is further configured to send the received second correction signal to the DSP. The DSP is further configured to calculate a second correction coefficient according to the received second correction signal and send the second correction coefficient to the IQ switch module. The IQ switch module sends the second correction coefficient to the BBU.

In accordance with an aspect of the present invention, a base station is further provided, including the multi-antenna transceiver as described in the first aspect.

In accordance with an aspect of the present invention, a control method of the multi-antenna transceiver is further provided, including: antenna channel downlink correction, sending, by the DSP, a generated first correction signal to the IQ switch module; sending, by the IQ switch module, the first correction signal to the digital intermediate-frequency processing module of the antenna channel; sending, by the digital intermediate-frequency processing module, the first correction signal to the downlink service channel; coupling, by the interface relation module, the first correction signal from the downlink service channel to the antenna correction link; sending, by the antenna correction link, the first correction signal to the DSP; and calculating, by the DSP, a first correction coefficient according to the first correction signal, and sending, by the IQ switch module, the first correction coefficient to the BBU; or antenna channel uplink correction, sending, by the DSP, a generated second correction signal to the antenna correction link; sending, by the antenna correction link, the second correction signal to the interface relation module; and coupling, by the interface relation module, the second correction signal to the uplink service channel; receiving, by the digital intermediate-frequency processing module, the second correction signal from the uplink service channel and sending the second correction signal to the IQ switch module; sending, by the IQ switch module, the second correction signal to the DSP; and calculating, by the DSP, a second correction coefficient according to the second correction signal, and sending, by the IQ switch module, the second correction coefficient to the BBU.

In accordance with an aspect of the present invention, a computer-readable storage medium is further provided, storing computer executable instructions which, when executed by a processor, cause the processor to carry out the control method of a multi-antenna transceiver described in the third aspect.

Other features and advantages of the present invention will be set forth in part in the description which follows and in part will become apparent from the description or may be learned from practice of the present invention. The objectives and other advantages of the present invention can be realized and attained by the structure particularly pointed out in the description, claims and the accompanying drawings.

### BRIEF DESCRIPTION OF DRAWINGS

The drawings are provided for a further understanding of the technical schemes of the present invention, and constitute a part of the description. The drawings and the embodiments of the present invention are used to illustrate and not to limit the technical schemes of the present invention.
FIG. 1 is a structural block diagram of a multi-antenna transceiver according to an embodiment of the present invention;
FIG. 2 is a schematic diagram of data interaction of an IQ switch module according to an embodiment of the present invention;
FIG. 3 is a schematic structural diagram of an interface relation module in a frequency division duplex (FDD) communication mode according to an embodiment of the present invention;
FIG. 4 is a schematic structural diagram of an interface relation module in a time division duplex (TDD) communication mode according to an embodiment of the present invention;
FIG. 5 is a schematic structural diagram of an interface relation module in an FDD communication mode according to another embodiment of the present invention;
FIG. 6 is a schematic structural diagram of an interface relation module in a TDD communication mode according to another embodiment of the present invention;
FIG. 7 is a schematic structural diagram of an antenna correction link in an FDD communication mode according to an embodiment of the present invention;
FIG. 8 is a schematic structural diagram of an antenna correction link in a TDD communication mode according to an embodiment of the present invention;
FIG. 9 is a flowchart of antenna channel downlink correction of an antenna channel correction method according to an embodiment of the present invention;
FIG. 10 is a flowchart of antenna channel uplink correction of an antenna channel correction method according to an embodiment of the present invention;
FIG. 11 is a schematic diagram of a downlink operation time sequence according to an embodiment of the present invention; and
FIG. 12 is a schematic diagram of an uplink operation time sequence according to an embodiment of the present invention.

### DETAILED DESCRIPTION

In order to make objectives, technical schemes and advantages of the present invention clearer, the present invention is described in further detail below with reference to the drawings and embodiments. It is to be understood that specific embodiments described herein are intended only to illustrate and not to limit the present invention.

It is to be noted that the terms such as "first" and "second" used in the description, claims and the above drawings are intended to distinguish similar objects, but are not intended to describe a specific sequence or precedence order.

At present, in a multi-antenna base station antenna correction scheme, an original correction signal is sent from the BBU and a correction weight is calculated by the BBU. The correction signal and the antenna correction link are coupled at the antenna. As a result, the antenna correction link may run from the BBU to the antenna, which not only results in a long link, but also have the BBU, a transceiver module TRX and other section modules in different fields involved. Development and debugging of antenna correction functions require collaboration across multiple fields and sections, which not only is inefficient and prone to failure, but also takes up a lot of transmission resources of carrier signals and baseband.

Based on this, according to some embodiments of the present invention, a base station, a multi-antenna transceiver, a control method of the multi-antenna transceiver and a computer-readable storage medium are proposed. According to the present invention, an antenna correction signal link is shortened and separated from a baseband processing part, and all the procedures are completed by a transceiver board, so that debugging, use and maintenance of antenna correction functions no longer require cross-section collaboration, efficiency and reliability are improved, and transmission resources of carrier signals and baseband are saved.

The following is a further illustration of the present invention with reference to the drawings.

### Embodiment one

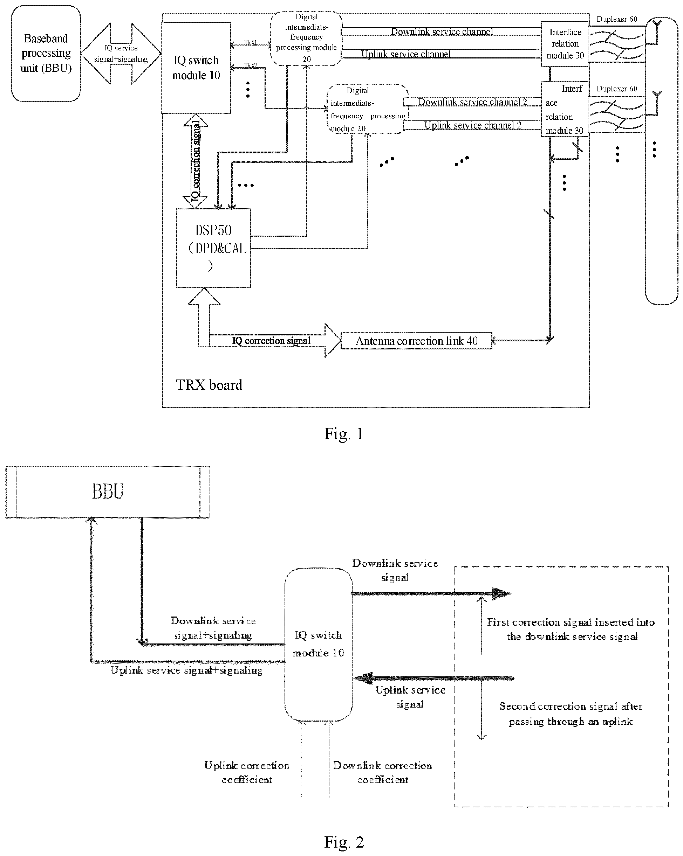

FIG. 1 is a structural block diagram of a multi-antenna transceiver according to an embodiment of the present invention. As shown in FIG. 1, the multi-antenna transceiver includes an IQ switch module 10, and a digital intermediate-frequency processing module 20 of each antenna channel, an interface relation module 30 of each antenna channel, an antenna correction link 40 and a DSP 50. Various parts of the multi-antenna transceiver are all integrated into a transceiver (TRX) board. Generation of a correction signal and calculation of a correction coefficient are both performed by the DSP 50, so that the multi-antenna transceiver according to this embodiment can realize antenna correction separately.

In the case of antenna channel downlink correction, the DSP 50 generates a first correction signal and sends the first correction signal to the IQ switch module 10.

The IQ switch module 10 sends the received first correction signal to the digital intermediate-frequency processing module 20 of each antenna channel.

The digital intermediate-frequency processing module 20 sends the received first correction signal to a corresponding downlink service channel.

The interface relation module 30 is communicated with a service channel (including the downlink service channel and an uplink service channel) and a duplexer 60, and includes a radio-frequency interface that connects the TRX board and the duplexer 60 . The interface relation module 30 couples the first correction signal from the downlink service channel into the antenna correction link 40. The first connection signal entering the antenna correction link 40 is a first correction signal passing through an antenna channel downlink. Compared with the first correction signal not passing through the antenna channel downlink (the first correction signal before being sent by the IQ switch module 10 to each antenna channel), the first correction signal passing through the antenna channel downlink does not change, but may have an amplitude and phase difference.

The antenna correction link 40 receives the first correction signal from the interface relation module 30 of each antenna channel, and sends the first correction signal to the DSP 50.

The DSP 50 receives, from the antenna correction link 40, the first correction signal passing through the antenna channel downlink, calculates a first correction coefficient according to the first correction signal passing through the antenna channel downlink and the first correction signal sent to the antenna channel (i.e., the first correction signal sent to the IQ switch module 10), and sends the first correction coefficient to the IQ switch module 10. The IQ switch module 10 sends the first correction coefficient to the BBU for use by the BBU, so as to realize antenna channel downlink correction. Thus, generation of the first correction signal and calculation of the first correction coefficient are no longer performed by the BBU, and the BBU receives only a calculation result of a downlink correction coefficient (the first correction coefficient) of the antenna channel.

In the case of antenna channel uplink correction, the DSP 50 generates a second correction signal and sends the second correction signal to the antenna correction link 40.

The antenna correction link 40 sends the received second correction signal to the interface relation module 30 of each antenna channel.

The interface relation module 30 couples the second correction signal from the antenna correction link 40 into an uplink service channel. Thus, in the antenna channel downlink and uplink correction, the antenna correction signals (the first correction signal and the second correction signal) are coupled at the interface relation module 30, that is, coupled at the radio-frequency interface connecting the TRX board and the duplexer 60, and are no longer coupled from the antenna and then moved into the TRX board.

The digital intermediate-frequency processing module 20 receives the second correction signal from the corresponding uplink service channel and sends the second correction signal to the IQ switch module 10.

The IQ switch module 10 receives the second correction signal from the digital intermediate-frequency processing module 20 of each antenna channel. The received second correction signal is a second correction signal passing through an antenna channel uplink. Compared with the second correction signal not passing through the antenna channel uplink (the second correction signal before being coupled from the antenna correction link 40 into the uplink service channel), the second correction signal passing through the antenna channel uplink does not change, but may have an amplitude and phase difference and be sent.

The DSP 50 receives, from the antenna correction link 10, the second correction signal passing through the antenna channel uplink, calculates a second correction coefficient according to the second correction signal passing through the antenna channel uplink and the second correction signal sent to the antenna channel uplink (i.e., the second correction signal sent to the antenna correction link 40), and sends the second correction coefficient to the IQ switch module 10. The IQ switch module 10 sends the second correction coefficient to the BBU for use by the BBU, so as to realize antenna channel downlink correction. Thus, generation of the second correction signal and calculation of the second correction coefficient are no longer performed by the BBU, and the BBU receives only a calculation result of a downlink correction coefficient (the second correction coefficient) of the antenna channel.

In this embodiment, the first correction signal and the second correction signal generated by the DSP 50 are IQ signals. In the antenna channel downlink correction, in order that these signals can be distinguished after being combined into one channel on the antenna correction link 40, different first correction signals are generated for downlink correction of each antenna channel. In the calculation of the correction coefficient, since the first connection signal is generated by the DSP 50, a difference between N first correction signals is known to the DSP, and the DSP may compensate for the difference, ensuring that the N first correction signals used in the calculation of the first correction coefficient are the same.

In this embodiment, a coupling end of the antenna correction signal is changed from the antenna to the interface relation module, and the DSP generates the antenna correction signal and calculates the antenna correction coefficient. Therefore, not only the antenna correction link is shortened, but also the generation of the correction signal and the calculation of the correction coefficient are separated from the BBU and wholly completed by the antenna transceiver. Only the calculated correction coefficient is uploaded to the BBU, and uplink and downlink correction signals are no longer uploaded and received repeatedly. Thus, the amount of signal transmission is reduced, so that debugging, use and maintenance of antenna correction functions no longer require cross-section collaboration, improving the operating efficiency and reliability of antenna correction.

In this embodiment, as shown in FIG. 2, the IQ switch module 10 further receives, from the BBU, a downlink service signal modulated with antenna correction signaling. After receiving the signaling, the DSP 50 starts to send a first correction signal and a second correction signal. The IQ switch module 10 receives the first correction signal sent by the DSP 50 to each antenna channel, inserts the first correction signal into the downlink service signal sent to each antenna channel, and sends the downlink service signal to the digital intermediate-frequency processing module 20 of each antenna channel at the same time. After passing through the downlink service channel, the signal is split into two channels by the interface relation module 30. One channel of signal is sent to the antenna through the duplexer 60, and the other is coupled into the antenna correction link 40, and finally enters the DSP 50 from the antenna correction link 40. The DSP 50 extracts the first correction signal from the received downlink service signal and the first correction signal for calculating the first correction coefficient. Inserting the received first correction signal into the downlink service signal means inserting the first correction signal into downlink service signal particles continuously transmitted in time.

In the other direction, the second correction signal is coupled into the uplink service channel through the interface relation module 30 to be superimposed with the uplink service signal, so as to be combined into an uplink signal. Therefore, in the antenna channel uplink correction, the signal sent by the digital intermediate-frequency processing module 20 of each antenna channel is an uplink signal. The IQ switch module 10 receives the uplink signal from the digital intermediate-frequency processing module 20. On one channel, the uplink service signal and the second correction signal are directly sent to the DSP 50, and the DSP 50 extracts the second correction signal from the received uplink signal for calculating the second correction coefficient. On the other channel, the correction coefficient received from the DSP 50 is inserted into the uplink signal in a signaling form and is sent to the BBU for use by the BBU, thus realizing the adjustment of the amplitude and phase of the antenna channel and keeping the amplitude and phase of all the antenna channels consistent. The correction coefficient is the first correction coefficient or the second correction coefficient.

Thus, in this embodiment, the BBU sends an antenna correction instruction to the antenna transceiver by modulating signaling on the downlink service signal, and the antenna transceiver uploads the correction coefficient to the BBU by inserting a signaling in the uplink service signal, which no longer requires special interaction among optical fibers, carriers and the BBU, saving the transmission resources of carrier signals and baseband.

The multi-antenna transceiver according to this embodiment can further realize downlink feedback of the antenna channel, and no longer transmits a feedback signal through a feedback channel of each antenna channel disposed between the digital intermediate-frequency processing module 20 and the interface relation module 30. Feedback links are all integrated into one antenna correction link, that is, downlink power detection, standing-wave detection and digital pre-distortion (DPD) backward collected data collection of N antenna channels are all integrated into the antenna correction link 40, which omits N feedback channels and reduces complexity and hardware costs of the transceiver. The downlink feedback of the antenna channel in this embodiment includes two situations as follows.
(I) In the first situation, the feedback signal for the downlink feedback of the antenna channel includes at least one of the following: digital pre-distortion (DPD) backward collected data; and a forward power detection signal (FWD).

In this situation, the antenna transceiver according to this embodiment has a DPD function and a power detection function, but has no standing-wave detection function. In this case, in order to realize downlink feedback in this situation, the interface relation module 30 in the embodiment is further configured to couple the feedback signal from the downlink service channel into the antenna correction line 40. When the feedback signal includes the DPD backward collected data and the FWD, two signals are simultaneously coupled into the antenna correction line 40.

The antenna correction link 40 is further configured to sequentially send the feedback signal received from the interface relation module 30 of each antenna channel to the DSP 50.

The DSP 50 is further configured to receive the feedback signal from the antenna correction line 40. If the received feedback signal includes the DPD backward collected data, a DPD coefficient is calculated according to DPD forward collected data and the DPD backward collected data and is sent to the digital intermediate-frequency processing module 20 for use by the digital intermediate-frequency processing module 20. The DPD forward collected data is collected by the digital intermediate-frequency processing module 20 from the corresponding downlink service channel, and is then sent to the DSP 50. If the received feedback signal includes the FWD, a power state is determined according to the FWD, and abnormal state information is sent to a CPU of the multi-antenna transceiver for storage. The CPU may record abnormal events as alarms and provide them in logs for an operator to view.

In this situation, the multi-antenna transceiver according to the embodiment may be in a frequency division duplex (FDD) communication mode or a time division duplex (TDD) communication mode. That is, this embodiment is applicable to FDD and TDD communication systems. Implementation structures of the interface relation module 30 and the antenna correction link 40 in the two communication modes are described in detail below respectively.

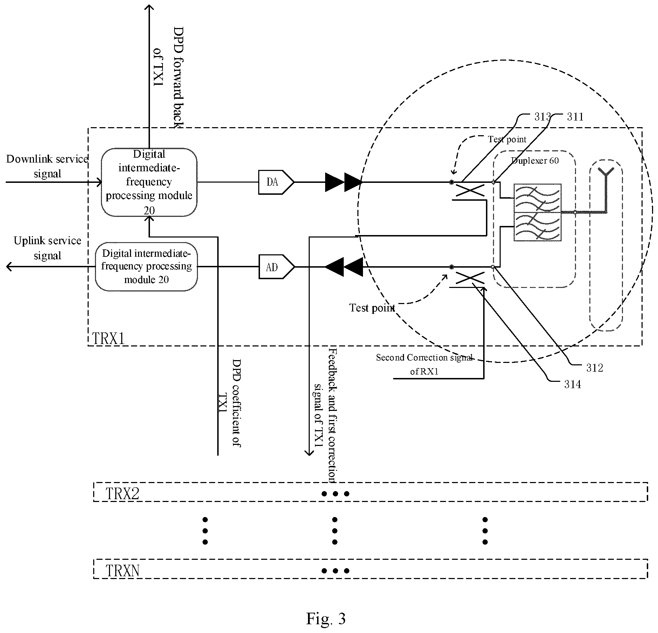

In the FDD communication mode, as shown in FIG. 3, the interface relation module 30 includes a first radio-frequency interface 311, a first directional coupler 313, a second radio-frequency interface 312 and a second directional coupler 314. In the FDD communication mode, the antenna channel downlink correction and the antenna channel uplink correction are realized by utilizing two completely separated links (downlink and uplink of the antenna channel), so that the antenna channel downlink correction and the antenna channel uplink correction may be performed simultaneously or not, which is not limited in this embodiment.
(1) Antenna channel downlink correction and antenna channel downlink feedback are included in an antenna channel downlink direction. The antenna channel downlink correction and the antenna channel downlink feedback cannot be performed simultaneously because the same downlink is used. The antenna channel downlink correction or the antenna channel downlink feedback may be performed first, which is not limited in this embodiment.

In the case of antenna channel downlink correction, the first directional coupler 313 receives, by an input port, a downlink signal from the downlink service channel, where the downlink signal refers to the downlink service signal and the first correction signal inserted into the downlink service signal for sending; sends the downlink signal to the first radio-frequency interface 311 from a straight-through output port; and couples the downlink signal into the antenna correction link 40 from a coupling output port.

The first radio-frequency interface 311 sends the downlink signal received from the first directional coupler 313 to an antenna through the duplexer 60.

Alternatively, in the case of downlink feedback of the antenna channel, the first directional coupler 313 receives, by the input port, the feedback signal from the downlink service channel; send the feedback signal to the first radio-frequency interface 311 from the straight-through output port; and couples the feedback signal into the antenna correction link 40 from the coupling output port.

The first radio-frequency interface 311 sends the feedback signal received from the first directional coupler 313 to the antenna through the duplexer 60.

(2) Only antenna channel uplink correction is included in an antenna channel uplink direction.

In the case of antenna channel uplink correction, the second radio-frequency interface 312 receives, from the duplexer 60, an uplink service signal from an antenna and sends the uplink service signal to the second directional coupler 314.

The second directional coupler 314 receives, by an isolation port, the uplink service signal from the second radio-frequency interface 312 and sends the uplink service signal to a coupling output port; receives, by an input port, the second correction signal from the antenna correction link 40, and couples the second correction signal to the coupling output port to be superimposed with the uplink service signal so as to be combined into an uplink signal; and then sends the uplink signal to the uplink service channel through the coupling output port, to inject the second correction signal into the uplink service channel. The uplink signal refers to the uplink service signal and the second correction signal after superimposition.

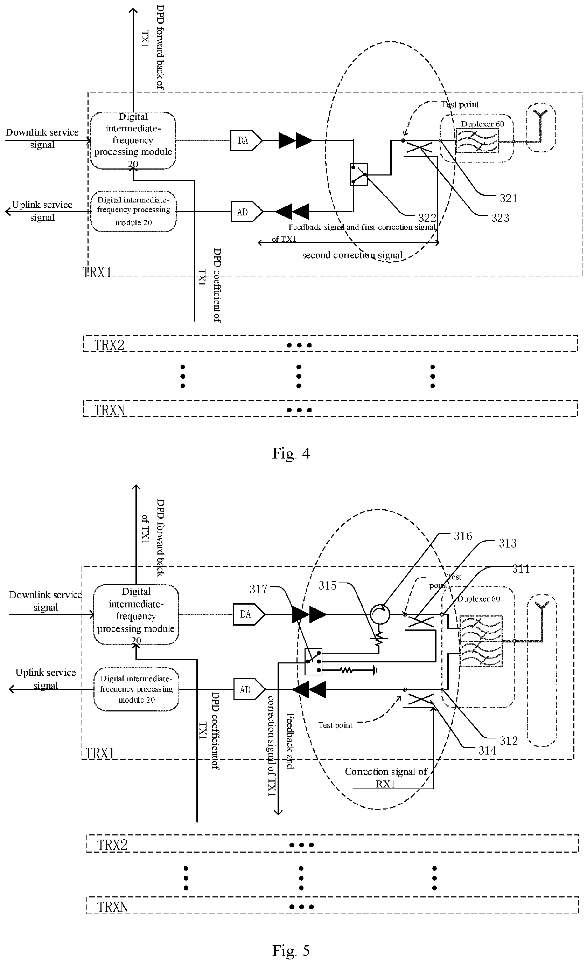

In the TDD communication mode, as shown in FIG. 4, the interface relation module 30 includes a radio-frequency interface 321, a first two-to-one switch 322 and a directional coupler 323. In the TDD communication mode, the downlink and the uplink do not operate simultaneously. In a service signal transmission time slot, a first selection terminal of the first two-to-one switch 322 is placed at a fixed terminal, the interface relation module 30 communicates the downlink service channel with the duplexer, and the downlink is connected to start operating. In a service signal receiving time slot, a second selection terminal of the first two-to-one switch 322 is placed at the fixed terminal, the interface relation module 30 communicates the uplink service channel with the duplexer, and the uplink is connected to start operating.
(1) Antenna channel downlink correction and antenna channel downlink feedback are included in an antenna channel downlink direction. That is, the antenna channel downlink correction and the antenna channel downlink feedback are performed in the service signal transmission time slot. The antenna channel downlink correction and the antenna channel downlink feedback cannot be performed simultaneously because the same downlink is used. The antenna channel downlink correction or the antenna channel downlink feedback may be performed first, which is not limited in this embodiment.

In the case of antenna channel downlink correction, the first two-to-one switch 322 receives, by a first selection terminal, a downlink signal from the downlink service channel and sends the downlink signal to the directional coupler 323 through a fixed terminal. That is, the first selection terminal of the first two-to-one switch 322 is controlled to be placed at the fixed terminal, the interface relation module 30 communicates the downlink service channel with the duplexer, and the downlink signal is sent to the antenna and the antenna correction link in the service signal transmission time slot.

The directional coupler 323 receives, by a first port (input port), the downlink signal from the first two-to-one switch 322; sends the downlink signal to the radio-frequency interface 321 from a second port (straight-through output port); and couples the downlink signal into the antenna correction link 40 from a third port (coupling output port).

The radio-frequency interface 321 sends the downlink signal received from the directional coupler 323 to an antenna through the duplexer 60.

Alternatively, in the case of downlink feedback of the antenna channel, the first two-to-one switch 322 receives, by a first selection terminal, a feedback signal from the downlink service channel and sends the feedback signal to the directional coupler 323 through a fixed terminal. That is, the first selection terminal of the first two-to-one switch 322 is controlled to be placed at the fixed terminal, the interface relation module 30 communicates the downlink service channel with the duplexer, and the feedback signal is sent to the antenna and the antenna correction link in the service signal transmission time slot.

The directional coupler 323 receives, by a first port (input port), the feedback signal from the first two-to-one switch 322; sends the feedback signal to the radio-frequency interface 321 through a second port (straight-through output port); and couples the feedback signal into the antenna correction link 40 through a third port (coupling output port).

The radio-frequency interface 321 sends the feedback signal received from the directional coupler 323 to an antenna through the duplexer 60.

(2) Only antenna channel uplink correction is included in an antenna channel uplink direction. That is, the antenna channel uplink correction is performed in the service signal receiving time slot.

In the case of antenna channel uplink correction, the radio-frequency interface 321 receives, from the duplexer 60, an uplink service signal from an antenna and sends the uplink service signal to the directional coupler 323.

The directional coupler 323 receives, by a second port (isolation port), the uplink service signal from the radio-frequency interface 321 and transmits the uplink service signal to a first port (coupling output port) of the directional coupler 323; receives, by a third port (input port), the second correction signal from the antenna correction link 40, and couples the second correction signal to the first port to be superimposed with the uplink service signal so as to be combined into an uplink signal; and then sends the uplink signal to the first two-to-one switch 322 by the first port (coupling output port). The second correction signal is injected into the uplink service channel through the first two-to-one switch 322.

The first two-to-one switch 322 receives, by the fixed terminal, an uplink signal from the directional coupler 323 and sends the uplink signal to the uplink service channel by the second selection terminal. That is, the second selection terminal of the first two-to-one switch 322 is controlled to be placed at the fixed terminal, the interface relation module 30 communicates the uplink service channel with the duplexer, and the uplink signal is sent to the uplink service channel in the service signal receiving time slot.

(II) In the second situation, the feedback signal for the downlink feedback of the antenna channel includes at least one of the following: DPD backward collected data; an FWD; and a standing-wave detection signal (REV).

In this situation, the antenna transceiver according to the embodiment has a DPD function, a power detection function and a standing-wave detection function. In this case, in order to realize downlink feedback in this situation, the interface relation module 30 in the embodiment is further configured to send the feedback signal from the downlink service channel to the antenna correction line 40.

The antenna correction link 40 is further configured to sequentially send the feedback signal received from the interface relation module 30 of each antenna channel to the DSP 50.

The DSP 50 is further configured to receive the feedback signal from the antenna correction line 40. If the received feedback signal includes the DPD backward collected data, a DPD coefficient is calculated according to DPD forward collected data and the DPD backward collected data and is sent to the digital intermediate-frequency processing module 20 for use by the digital intermediate-frequency processing module 20. The DPD forward collected data is collected by the digital intermediate-frequency processing module 20 from the corresponding downlink service channel, and is then sent to the DSP 50. If the received feedback signal includes the FWD, a power state is determined according to the FWD, and abnormal state information is sent to a CPU of the multi-antenna transceiver for storage. If the received feedback signal includes the REV, a standing-wave state is determined according to the REV, and abnormal state information is sent to the CPU of the multi-antenna transceiver for storage. The CPU may record abnormal power and standing-wave events as alarms and provide them in logs for an operator to view.

In this situation, the multi-antenna transceiver according to the embodiment may be in an FDD communication mode or a TDD communication mode. That is, the embodiment is applicable to FDD and TDD communication systems. Implementation structures of the interface relation module 30 and the antenna correction link 40 in the two communication modes are described in detail below respectively.

In the FDD communication mode, as shown in FIG. 5, the interface relation module 30 includes a first radio-frequency interface 311, a second radio-frequency interface 312, a first directional coupler 313, a second directional coupler 314, an attenuator 315, a circulator 316 and a three-to-one switch 317. In the FDD communication mode, the antenna channel downlink correction and the antenna channel uplink correction are realized by utilizing two completely separated links (downlink and uplink of the antenna channel), so that the antenna channel downlink correction and the antenna channel uplink correction may be performed simultaneously or not, which is not limited in this embodiment.
(1) Antenna channel downlink correction and antenna channel downlink feedback are included in an antenna channel downlink direction. The antenna channel downlink correction and the antenna channel downlink feedback cannot be performed simultaneously because the same downlink is used. The antenna channel downlink correction or the antenna channel downlink feedback may be performed first, which is not limited in this embodiment. During the antenna channel downlink correction, a second selection terminal of the three-to-one switch 317 is placed at a fixed terminal all the time. During the antenna channel downlink feedback, a first selection terminal and the second selection terminal of the three-to-one switch 317 are placed at the fixed terminal in a preset order. The downlink feedback of the antenna channel is completed, and then a third selection terminal is always placed at the fixed terminal, until downlink feedback of other antenna channels of the multi-antenna transceiver is completed.

In the case of antenna channel downlink correction, the circulator 316 receives a downlink signal from the downlink service channel and sends the downlink signal to the first directional coupler 313.

The first directional coupler 313 receives the downlink signal by an input port; sends the downlink signal to the first radio-frequency interface 311 by a straight-through output port; and couples the downlink signal into the three-to-one switch 317 by a coupling output port.

The first radio-frequency interface 311 sends the downlink signal from the first directional coupler 313 to an antenna through the duplexer 60.

The three-to-one switch 317 receives, by a second selection terminal, the downlink signal from the first directional coupler 313 and sends the downlink signal to the antenna correction link 40 from a fixed terminal. During the antenna channel downlink correction, in order to ensure that the first correction signal is sent to the antenna correction link, the second selection terminal of the three-to-one switch 317 is placed at the fixed terminal all the time, until this round of antenna channel downlink correction is ended.

Alternatively, in the case of downlink feedback of the antenna channel, the circulator 316 receives the feedback signal from the downlink service channel; separates the REV from the feedback signal and sends the REV to the attenuator 315; sends the DPD backward collected data and/or the FWD in the feedback signal to the first directional coupler 313; and only sends the DPD backward collected data and/or the FWD to the first directional coupler 313 if the feedback signal does not include the REV.

The attenuator 315 attenuates the received REV to a preset value, and sends the REV to the three-to-one switch 317. Since the signal is large if a standing wave is abnormal, in order to prevent damages to the link, an obtained standing-wave detection signal is attenuated.

The first directional coupler 313 receives the DPD backward collected data and/or the FWD by the input port; sends the DPD backward collected data and/or the FWD to the first radio-frequency interface 311 by the straight-through output port; and sends the DPD backward collected data and/or the FWD obtained by coupling to the three-to-one switch 317 by the coupling output port.

The first radio-frequency interface 311 sends the DPD backward collected data and/or the FWD from the first directional coupler 313 to an antenna through the duplexer.

When the first selection terminal is placed at a fixed terminal, the three-to-one switch 317 receives, by the first selection terminal, the REV from the attenuator 315, and sends the REV to the antenna correction link 40 by the fixed terminal. Alternatively, when the second selection terminal is placed at the fixed terminal, the DPD backward collected data and/or the FWD from the first directional coupler 313 are/is received by the second selection terminal, and sent to the antenna correction link 40 by the fixed terminal. Thus, when the feedback signal includes the DPD backward collected data and the FWD, the DPD backward collected data and the FWD are simultaneously coupled into the antenna correction link. Alternatively, when the third selection terminal is placed at the fixed terminal, a load is connected by the third selection terminal. Downlink feedback is not performed on the antenna channel. That is, the feedback of the antenna channel is performed channel by channel. When the antenna feedback is performed in one channel, third selection terminals of the three-to-one switches 317 of other antenna channels are placed at fixed terminals to connect loads, and do not operate.

Therefore, in this embodiment, three states of downlink feedback, i.e., an REV state, a DPD backward collected data and/or FWD state and a load state, are realized by one three-to-one switch 317. After the REV state and the DPD backward collected data and/or FWD state are completed for the downlink feedback of each antenna channel in a certain order, the load state is performed all the time, until other antenna channels of the multi-antenna transceiver complete the REV state and the DPD backward collected data and/or FWD state in a certain order. Then, next downward feedback loop begins.

(2) Only antenna channel uplink correction is included in an antenna channel uplink direction.

In the case of antenna channel uplink correction, the second radio-frequency interface 312 receives, from the duplexer, an uplink service signal from an antenna and sends the uplink service signal to the second directional coupler 314.

The second directional coupler 314 receives, by an isolation port, the uplink service signal from the second radio-frequency interface 312 and sends the uplink service signal to a coupling output port; receives, by an input port, the second correction signal from the antenna correction link 40, and couples the second correction signal to the coupling output port to be superimposed with the uplink service signal so as to be combined into an uplink signal; and then sends the uplink signal to the uplink service channel by the coupling output port to inject the second correction signal into the uplink service channel for antenna channel uplink correction.

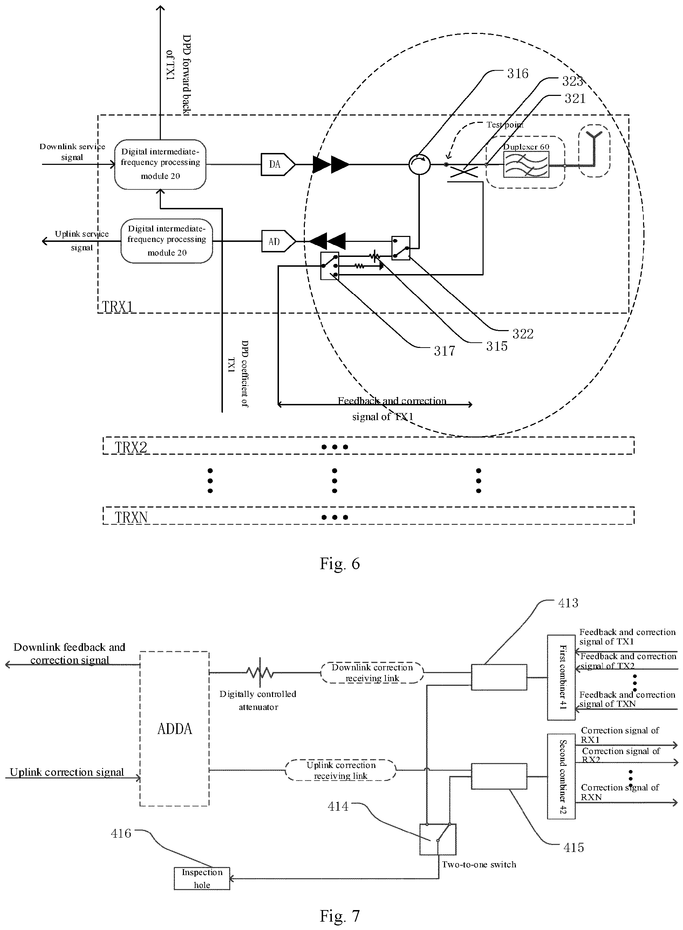

In a TDD communication mode, as shown in FIG. 6, the interface relation module 30 includes a radio-frequency interface 321, a directional coupler 323, an attenuator 315, a circulator 316, a three-to-one switch 317 and a first two-to-one switch 323. In the TDD communication mode, the downlink and the uplink do not operate simultaneously. In a service signal transmission time slot, a first selection terminal of the first two-to-one switch 323 is placed at a fixed terminal, the interface relation module 30 communicates the downlink service channel with the duplexer, and the downlink is connected to start operating. In a service signal receiving time slot, a second selection terminal of the first two-to-one switch 323 is placed at the fixed terminal, the interface relation module 30 communicates the uplink service channel with the duplexer, and the uplink is connected to start operating.
(1) Antenna channel downlink correction and antenna channel downlink feedback are included in an antenna channel downlink direction. That is, the antenna channel downlink correction and the antenna channel downlink feedback are performed in the service signal transmission time slot. The antenna channel downlink correction and the antenna channel downlink feedback cannot be performed simultaneously because the same downlink is used. The antenna channel downlink correction or the antenna channel downlink feedback may be performed first, which is not limited in this embodiment. The connection and control of the selection terminals of the three-to-one switch 317 are the same as those of the FDD, which are not described in detail herein.

In the case of antenna channel downlink correction, the circulator 316 receives a downlink signal from the downlink service channel and sends the downlink signal to the directional coupler 323.

The directional coupler 323 receives the downlink signal by a first port (input port); sends the downlink signal to the radio-frequency interface 321 by a second port (straight-through output port); and sends the downlink signal obtained by coupling into the three-to-one switch 317 by a third port (coupling port).

The radio-frequency interface 321 sends the received downlink signal to an antenna through the duplexer 60.

The three-to-one switch 317 receives, by a second selection terminal, the downlink signal from the directional coupler 316 and sends the downlink signal to the antenna correction link 40 from a fixed terminal. During the antenna channel downlink correction, in order to ensure that the first correction signal is sent to the antenna correction link, the second selection terminal of the three-to-one switch 317 is placed at the fixed terminal all the time, until this round of antenna channel downlink correction is ended.

Alternatively, in the case of downlink feedback of the antenna channel, the circulator 316 receives the feedback signal from the downlink service channel, separates the REV therefrom and sends the REV to the first two-to-one switch 322, and sends the DPD backward collected data and/or the FWD to the directional coupler.

The first two-to-one switch 322 receives, by the fixed terminal, the REV sent from the circulator 316, and sends the REV to the attenuator 315 from the first selection terminal.

The attenuator 315 attenuates the REV from the first two-to-one switch to a preset value, and sends the REV to the three-to-one switch 317.

The directional coupler 323 receives the DPD backward collected data and/or the FWD by the first port (input port); sends the DPD backward collected data and/or the FWD to the radio-frequency interface 321 from a second port (straight-through output port); and sends the DPD backward collected data and/or the FWD obtained by coupling to the three-to-one switch 317 from the third port (coupling output port).

The radio-frequency interface 321 sends the received DPD backward collected data and/or FWD to the antenna through the duplexer.

When the first selection terminal is placed at the fixed terminal, the three-to-one switch 317 receives, by the first selection terminal, the REV from the attenuator 315, and sends the REV to the antenna correction link 40 from the fixed terminal. When the second selection terminal is placed at the fixed terminal, the DPD backward collected data and/or the FWD from the directional coupler 323 are/is received by the second selection terminal, and sent to the antenna correction link 40 from the fixed terminal. When the third selection terminal is placed at the fixed terminal, a load is connected by the third selection terminal. The antenna channel feeds back no signal during the downlink feedback.

(2) Only antenna channel uplink correction is included in an antenna channel uplink direction. That is, the antenna channel uplink correction is performed in the service signal receiving time slot. During the antenna channel uplink correction, the second selection terminal of the three-to-one switch 317 is placed at the fixed terminal all the time, and the directional coupler 323 is connected to the antenna correction link 40, ensuring that the second correction signal in the antenna correction link 40 can enter the directional coupler 323.

In the case of antenna channel uplink correction, the radio-frequency interface 321 receives, from the duplexer, an uplink service signal from an antenna and sends the uplink service signal to the directional coupler 323.

The three-to-one switch 317 receives, by the fixed terminal, the second correction signal from the antenna correction link 40, and sends the second correction signal to the directional coupler 323 by the second selection terminal.

The directional coupler 323 receives, by a second port (isolation port), the uplink service signal from the radio-frequency interface 321 and transmits the uplink service signal to a first port (coupling output port); receives the second correction signal by a third port (input port), and couples the second correction signal to the first port (coupling output port) to be superimposed with the uplink service signal so as to be combined into an uplink signal; and then sends the uplink signal to the circulator 316 by the first port. The second correction signal is finally injected into the uplink service channel through the first two-to-one switch 322.

The circulator 316 receives the uplink signal from the directional coupler 323, and sends the uplink signal to the first two-to-one switch 322.

The first two-to-one switch 322 receives, by the fixed terminal, the uplink signal from the circulator 316, and sends the uplink signal to the uplink service channel by the second selection terminal.

In this embodiment, a downlink feedback function is integrated on the antenna correction link 40, which saves N feedback channels and reduces the complexity and hardware costs of the multi-antenna transceiver. Therefore, in this embodiment, the antenna correction link 40 includes a combination unit, a digitally controlled attenuator and an ADDA converter.
(1) Antenna channel downlink correction and antenna channel downlink feedback are included in an antenna channel downlink direction. The antenna channel downlink correction and the antenna channel downlink feedback cannot be performed simultaneously because the same antenna correction link is used for transmission. The antenna channel downlink correction or the antenna channel downlink feedback may be performed first, provided that correspondence with the interface relation module 30 is ensured, which is not limited in this embodiment.

In the case of antenna channel downlink correction, the combination unit receives a downlink signal from a corresponding interface relation module 30 of each antenna channel, combines the downlink signals into one channel, and sends the signal to a downlink correction receiving link.

The digitally controlled attenuator attenuates the downlink signal from the downlink correction receiving link and sends the attenuated downlink signal to the ADDA converter.

The ADDA converter performs digital-to-analog conversion on the downlink signal from the digitally controlled attenuator and sends the downlink signal to the DSP 50.

In the case of downlink feedback of the antenna channel, the combination unit receives the feedback signal from the corresponding interface relation module 30 of each antenna channel in sequence and correspondingly, sends the feedback signal to the downlink correction receiving link.

The digitally controlled attenuator attenuates the feedback signal from the downlink correction receiving link and sends the attenuated feedback signal to the ADDA converter.

The ADDA converter performs digital-to-analog conversion on the feedback signal from the digitally controlled attenuator and sends the feedback signal to the DSP 50.

In this embodiment, during the antenna channel downlink correction, when multiple downlink signals are combined into one channel, the signal is large, while in the antenna channel downlink feedback, signal is transmitted in a single-channel loop, and the signal is small. In contrast, the ADDA converter has a threshold limit. When the signal is too large or too small and exceeds a threshold, the ADDA converter cannot collect the signal. In order to improve the reliability of transmission of the antenna correction link, during the downlink feedback of the antenna channel, the digitally controlled attenuator of the embodiment attenuates the downlink signal after combination according to a first preset attenuation amplitude. In this case, the attenuation amplitude is large, ensuring that the signal may not be so large as to exceed the threshold. In the downlink feedback of the antenna channel, the feedback signal is attenuated according to a second preset attenuation amplitude. In this case, the attenuation amplitude is small, ensuring that the signal will not be too large to exceed the threshold.

(2) Only antenna channel uplink correction is included in an antenna channel uplink direction.

In the case of antenna channel uplink correction, the ADDA converter performs analog-to-digital conversion on the second correction signal from the DSP 50 and sends the second correction signal to an uplink correction transmission link.

The combination unit divides the second correction signal from the uplink correction transmission link into multiple channels and simultaneously sends the signals to the corresponding interface relation module 30 of each antenna channel.

In this embodiment, the antenna correction link 40 further includes an inspection hole and a power divider or coupler.

The inspection hole is an external interface configured to connect a corresponding test device to detect an amplitude and phase difference value (second amplitude and phase difference value) of N uncombined antenna correction links, the state and quality of the downlink of the antenna channel, and the state and performance of the uplink. In the embodiment, if directional couplers of N antenna channels are respectively taken as a starting point of the antenna correction link, actually N uncombined parts of the antenna correction links exist between the directional couplers of the N antenna channels and the combination unit. In practice, an amplitude and phase difference may exist among the N uncombined parts of the antenna correction links. In order to improve the accuracy of antenna correction, a second amplitude and phase difference value of each uncombined antenna correction link part may be tested and superimposed with a corresponding correction coefficient.

The power divider or coupler has a first port connected to a combiner, a second port connected to the downlink correction receiving link or uplink correction transmission link, and a third port connected to the inspection hole and connecting the inspection hole to the antenna correction link between the combiner and the downlink correction receiving link or the uplink correction transmission link, to receive a downlink service signal after combination from the combination unit and output the downlink service signal to an external detection device from the inspection hole; or receive, from the inspection hole, a test signal inputted by the external detection device and send the test signal to the combination unit where the test signal is divided into multiple channels and sent to a directional coupling unit of each antenna channel. Since the antenna correction link is the same as each antenna channel, various detections can be performed on the antenna channel through the inspection hole. The function of the inspection hole includes, but is not limited to, detecting the second amplitude and phase difference value of N uncombined antenna correction links, the state and quality of the downlink of the antenna channel, and the state and performance of the uplink.
(1) In this embodiment, a method for detecting an amplitude and phase difference value of N uncombined antenna correction links through an inspection hole includes the following steps.

When the transceiver does not operate (under passive conditions), one end of a vector network analyzer is connected to the inspection hole. At the other end, point inspection is performed on a test point of each antenna channel to measure a second amplitude and phase difference value of each uncombined antenna correction link (including an uncombined uplink correction transmission link and an uncombined downlink correction receiving link), which is saved in the DSP 50. When calculating a correction coefficient, the DSP 50 superimposes the second amplitude and phase difference value corresponding to each uncombined antenna correction link. On the downlink, the test point is disposed at the input port of the directional coupler; and on the uplink, the test point is disposed at the coupling port of the directional coupler.

(2) In this embodiment, a method for detecting states and quality of downlinks of N antenna channels through an inspection hole includes the following steps.

When the transceiver operates, the combination unit receives the downlink service signal coupled from the directional coupler of each downlink, and combines the downlink service signals into one downlink service signal for output. The power divider or coupler receives the downlink service signal from the combination unit, and divides the signal into two channels, one of which is sent to the downlink correction receiving link and the other is outputted from the inspection hole. The state and quality of the antenna channel downlink are obtained by detecting the downlink service signal outputted from the inspection hole.

(3) In this embodiment, a method for detecting states and quality of uplinks of N antenna channels through an inspection hole includes the following steps.

When the transceiver operates, the external detection device inputs a test signal from the inspection hole, the power divider or coupler inputs the test signal into the combination unit. The combination unit divides the test signal into N channels which are sent to each directional coupler. The directional coupler injects the test signal into the uplink. The state and performance of the antenna channel uplink are tested through the test signal inputted from the inspection hole.

In this embodiment, in the FDD communication mode, as shown in FIG. 7, the combination unit includes a first combiner 411 and a second combiner 412.

The first combiner 411 is configured to, in downlink correction or downlink feedback of the antenna channel, receive a downlink signal or feedback signal from a corresponding interface relation module of each antenna channel and send the signal to the downlink correction receiving link. The first combiner 411 and the downlink correction receiving link are connected to a first selection terminal of a second two-to-one switch 414 through a first power divider or coupler 413, and a fixed terminal of the second two-to-one switch 414 is connected to the inspection hole.

The second combiner 412 is configured to, in antenna channel uplink correction, divide a second correction signal from the uplink correction transmission link into multiple channels and send each signal to the corresponding interface relation module of each antenna channel. The second combiner 412 and the uplink correction receiving link are connected to a second selection terminal of the second two-to-one switch 414 through a second power divider or coupler 415, and a fixed terminal of the second two-to-one switch 414 is connected to the inspection hole 416.

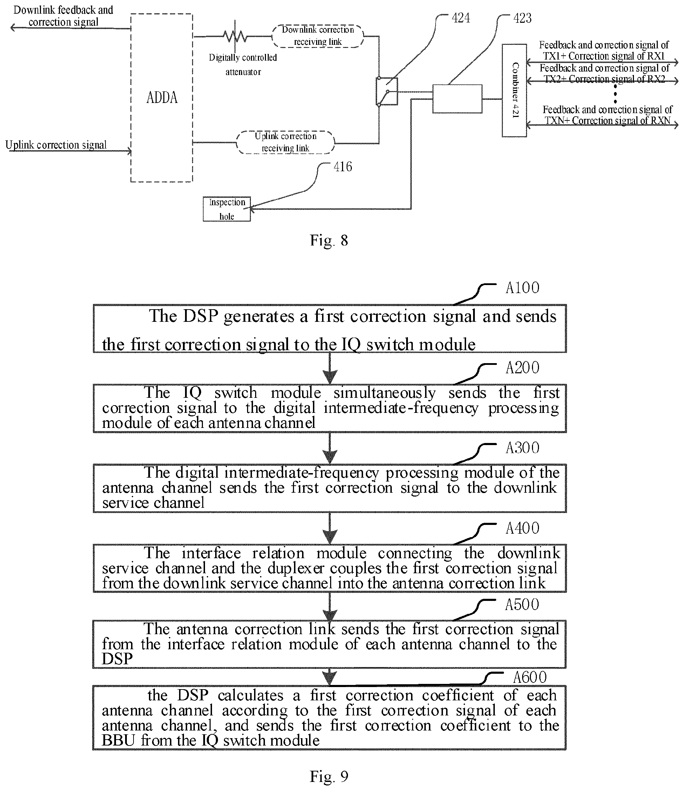

In this embodiment, in the TDD communication mode, as shown in FIG. 8, the combination unit includes a combiner 421.

The combiner 421 is configured to, in downlink correction or downlink feedback of the antenna channel, receive a downlink signal or feedback signal from the corresponding interface relation module of each antenna channel and send the signal to the downlink correction receiving link.

Alternatively, in antenna channel uplink correction, the combiner 421 is configured to divide a second correction signal from the uplink correction transmission link into multiple channels and send each signal to the corresponding interface relation module of each antenna channel. The downlink correction receiving link and the uplink correction transmission link are connected to two selection terminals of a third two-to-one switch 424 respectively, with a fixed terminal of the third two-to-one switch 424 connected to a first terminal of the power divider or coupler 423. The power divider or coupler 423 has a second terminal connected to the combiner 421 and a third terminal connected to the inspection hole 416.

### Embodiment two

This embodiment further provides an antenna channel correction method, applied to the multi-antenna transceiver as described in Embodiment one, including antenna channel downlink correction and antenna channel uplink correction.

As shown in FIG. 9, the antenna channel downlink correction includes steps A100 to A600.

At A100, the DSP generates a first correction signal and sends the first correction signal to the IQ switch module. Thus, the first correction signal for downlink correction is no longer generated by the BBU, eliminating cross-section collaboration of downlink correction.

At A200, the IQ switch module simultaneously sends the first correction signal to the digital intermediate-frequency processing module of each antenna channel.

At A300, the digital intermediate-frequency processing module of each antenna channel sends the first correction signal to the downlink service channel.

At A400, the interface relation module connecting the downlink service channel and the duplexer couples the first correction signal from the downlink service channel into the antenna correction link. Thus, in this embodiment, the antenna is no longer taken as a coupling end, which not only reduces a length of the antenna correction link, but also ensures consistence with the coupling end for downlink feedback, so that it is possible for antenna correction and downlink feedback to be integrated and transmitted on one antenna correction link.

At A500, the antenna correction link sends the first correction signal from the interface relation module of each antenna channel to the DSP. The first correction signal in this case is a first correction signal passing through an antenna channel downlink, which may have an amplitude and phase difference but does not change in other aspects compared with the first correction signal in steps A100 and A200.

At A600, the DSP calculates a first correction coefficient of each antenna channel according to the first correction signal of each antenna channel, and sends the first correction coefficient to the BBU from the IQ switch module. The BBU adjusts antenna channel parameters according to the first correction coefficient of each antenna channel, to make the amplitude and phase of each antenna channel downlink consistent. In this way, both the generation of the first correction signal and the calculation of the first correction coefficient are irrelevant to the BBU, and only the final calculation result is sent to the BBU, which not only eliminates cross-section collaboration, but also greatly reduces the signal interaction between the multi-antenna transceiver and the BBU.

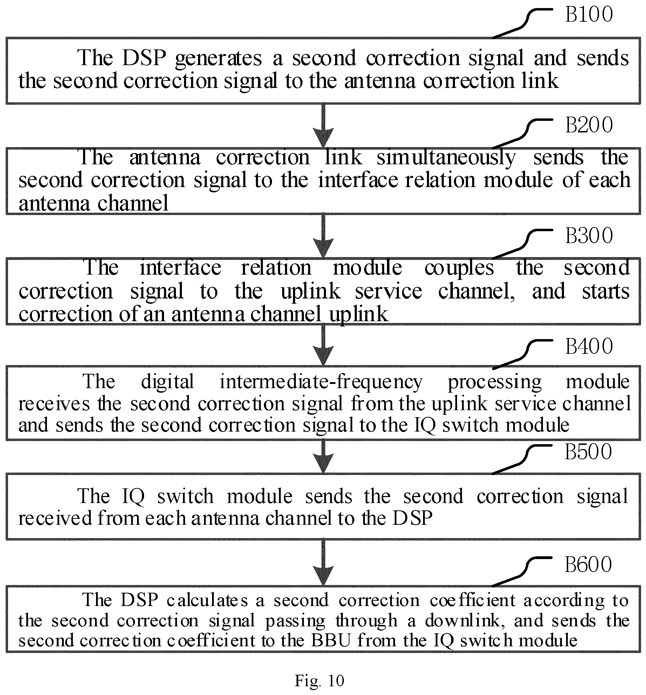

As shown in FIG. 10, the antenna channel uplink correction includes steps B100 to B600.

At B100, the DSP generates a second correction signal and sends the second correction signal to the antenna correction link. Thus, the second correction signal for uplink correction is no longer generated by the BBU, eliminating cross-section collaboration of uplink correction.

At B200, the antenna correction link simultaneously sends the second correction signal to the interface relation module of each antenna channel.

At B300, the interface relation module couples the second correction signal to the uplink service channel, and starts correction of an antenna channel uplink. Thus, in this embodiment, the antenna is no longer taken as the coupling end, which reduces a length of the antenna correction link.

At B400, the digital intermediate-frequency processing module receives the second correction signal from the uplink service channel and sends the signal to the IQ switch module.

At B500, the IQ switch module sends the second correction signal received from each antenna channel to the DSP. The second correction signal in this case is a second correction signal passing through the antenna channel uplink, which may have an amplitude and phase difference but does not change in other aspects compared with the first correction signal in steps B100 and B200.

At B600, the DSP calculates a second correction coefficient according to the second correction signal passing through a downlink, and sends the second correction coefficient to the BBU from the IQ switch module. The BBU adjusts antenna channel parameters according to the second correction coefficient of each antenna channel, to make the amplitude and phase of each antenna channel uplink consistent. In this way, both the generation of the first correction signal and the calculation of the first correction coefficient are irrelevant to the BBU, and only the final calculation result is sent to the BBU, which not only eliminates cross-section collaboration, but also greatly reduces the signal interaction between the multi-antenna transceiver and the BBU.

The second correction signal is generated by the DSP of the multi-antenna transceiver and sent to the antenna correction link, and no correction signal is generated by the BBU.

Based on the above, in the antenna channel correction method according to this embodiment, the coupling end of the antenna correction signal is changed from the antenna to the interface relation module, and the DSP generates the antenna correction signal and calculates the antenna correction coefficient. Therefore, the antenna correction link is shortened, the generation of the correction signal and the calculation of the correction coefficient are separated from the BBU and wholly completed by the antenna transceiver. Only the calculated correction coefficient is uploaded to the BBU, and uplink and downlink correction signals are no longer uploaded and received repeatedly. Thus, the amount of signal transmission is reduced, so that debugging, use and maintenance of antenna correction functions no longer require cross-section collaboration, improving the operating efficiency and reliability of antenna correction.

In this embodiment, step A200 includes, but is not limited to, the following steps: receiving, from the BBU, a downlink service signal modulated with antenna correction signaling; and inserting the first correction signal of each antenna channel received from the DSP into the downlink service signal, and sending the signal to the digital intermediate-frequency processing module of the corresponding antenna channel to start downlink correction. Thus, in this case, the downlink service signal and the first correction signal enter each antenna channel, and are collectively referred to as a downlink signal. The downlink signal may be sent in two channels by the interface relation module, one of which is sent to the antenna through the duplexer and the other is coupled to the antenna correction link. After the downlink signal is sent to the DSP by the antenna correction link, the DSP extracts the first correction signal from the downlink signal and calculates a first correction coefficient according to the downlink signal.

In this embodiment, step B500 includes, but is not limited to, the following step:
receiving an uplink signal from the digital intermediate-frequency processing module of each antenna channel, and dividing the uplink signal into two channels.

One channel of signal is sent to the DSP, and the DSP extracts the second correction signal from the uplink signal and calculates a second correction coefficient according to the second correction signal.

On the other channel, the correction coefficient received from the DSP is inserted into the uplink signal in a signaling form and sent to the BBU.

The correction coefficient is the first correction coefficient or the second correction coefficient. The uplink signal includes the uplink service signal and the second correction signal.

The antenna channel correction method of this embodiment is applicable to FDD and TDD communication systems. Processing processes of step A400 and step B300 in two modes are described below respectively.

In the FDD communication mode, step A400 and step B300 may be performed by utilizing two different interface relation modules respectively.
(1) The method is applied to a multi-antenna transceiver having an interface relation module including a first radio-frequency interface, a first directional coupler, a second radio-frequency interface and a second directional coupler. In this case, step A400 of this embodiment includes: receiving, by the first directional coupler through an input port, a downlink signal from an antenna downlink service channel; sending the received downlink signal by a straight-through output port to the first radio-frequency interface and from the first radio-frequency interface to the antenna through a duplexer; and coupling the downlink signal into an antenna correction link by a coupling output port.

Step B300 of this embodiment includes: receiving, by the second radio-frequency interface, from the duplexer, an uplink service signal from an antenna and sending the signal to the second directional coupler; and sending, by the second directional coupler, an uplink service signal received from an isolation port to a coupling output port; receiving, by an input port, the second correction signal from the antenna correction link, and coupling the signal to the coupling output port to be superimposed with the uplink service signal so as to be combined into an uplink signal; and sending the uplink signal to the uplink service channel by the coupling output port.

(2) The method is applied to the multi-antenna transceiver having an interface relation module including a first radio-frequency interface, a second radio-frequency interface, a first directional coupler, a second directional coupler, an attenuator, a circulator and a three-to-one switch. In this case, step A400 of this embodiment includes: receiving, by the circulator, a downlink signal from the downlink service channel and sending the signal to the first directional coupler; receiving, by the first directional coupler through an input port, the downlink signal, sending the downlink signal to the first radio-frequency interface by a straight-through output port, and coupling the signal into the three-to-one switch by a coupling output port; sending, by the first radio-frequency interface, the downlink signal to an antenna through a duplexer; and placing a second selection terminal of the three-to-one switch at a fixed terminal, and sending the received downlink signal to the antenna correction link.

Step B300 of this embodiment includes: receiving, by the second radio-frequency interface, from the duplexer, an uplink service signal from an antenna, and sending the signal to the second directional coupler; and sending, by the second directional coupler, the uplink service signal received from an isolation port to a coupling output port; coupling the second correction signal received from the antenna correction link by the input port to the coupling output port to be superimposed with the uplink service signal to be combined into an uplink signal; and sending the uplink signal to the uplink service channel by the coupling output port.

In the TDD communication mode, step A400 and step B300 may be performed by utilizing two different interface relation modules respectively.
(1) The method is applied to the multi-antenna transceiver having the interface relation module including a radio-frequency interface, a first two-to-one switch and a directional coupler. In this case, step A400 of this embodiment includes: placing a first selection terminal of the first two-to-one switch at a fixed terminal, and sending the downlink signal from the downlink service channel to the directional coupler; receiving, by the directional coupler through a first port, the downlink signal, sending the downlink signal to the radio-frequency interface by a second port, and coupling the downlink signal into the antenna correction link by a third port; and sending, by the radio-frequency interface, the received downlink signal to an antenna through a duplexer.

Step B300 of this embodiment includes: receiving, by the radio-frequency interface, from the duplexer, an uplink service signal from an antenna, and sending the signal to the directional coupler; sending, by the directional coupler, the uplink service signal received from the second port to the first port; receiving, by the third port, the second correction signal from the antenna correction link, and coupling the signal to the first port to be superimposed with the uplink service signal to be combined into an uplink signal; and sending the uplink signal by the first port; and placing a second selection terminal of the first two-to-one switch at the fixed terminal, and sending the uplink signal from the directional coupler to the uplink service channel.

(2) The method is applied to the multi-antenna transceiver having the interface relation module including a radio-frequency interface, a directional coupler, an attenuator, a circulator, a three-to-one switch and a first two-to-one switch. In this case, step A400 of this embodiment includes: receiving, by the circulator, a downlink signal from the downlink service channel and sending the downlink signal to the directional coupler; receiving, by the directional coupler through a first port, the downlink signal, sending the downlink signal to the radio-frequency interface by a second port, and coupling the downlink signal into the three-to-one switch by a third port; sending, by the radio-frequency interface, the received downlink signal to an antenna through a duplexer; and placing a second selection terminal of the three-to-one switch at a fixed terminal, and sending the received downlink signal to the antenna correction link.

In this case, step B300 of this embodiment includes: receiving, by the radio-frequency interface, from the duplexer, an uplink service signal from an antenna, and sending the signal to the directional coupler; placing the second selection terminal of the three-to-one switch at the fixed terminal, and sending the second correction signal from the antenna correction link to the directional coupler; sending, by the directional coupler, the uplink service signal received by a second port to the first port; coupling the second correction signal received by the third port to the first port to be superimposed with the uplink service signal so as to be combined into an uplink signal; and sending the uplink signal by the first port to the circulator; sending, by the circulator, the received uplink signal to the first two-to-one switch; and placing the second selection terminal of the first two-to-one switch at the fixed terminal, and sending the received uplink signal to the uplink service channel.

In this embodiment, step A500 includes, but is not limited to, the following steps: receiving the downlink signal from the corresponding interface relation module of each antenna channel, and combining the downlink signals into one channel; attenuating the combined-into-one-channel downlink signal according to a first preset attenuation amplitude, where the first preset attenuation amplitude is large to ensure that the attenuated signal does not exceed an ADDA converter threshold, because the combined signal during downlink correction is large; and performing digital-to-analog conversion on the attenuated downlink signal, and sending the signal to the DSP.

In this embodiment, step B200 includes, but is not limited to, the following steps: performing analog-to-digital conversion on the second correction signal from the DSP; and dividing the second correction signal into multiple channels and sending the signals simultaneously to the corresponding interface relation module of each antenna channel.

In this embodiment, since the correction signal coupling end includes no duplexer and no antenna, an amplitude and phase difference between the duplexer and the antenna may be measured and preserved in advance, and finally the difference may be superimposed on a calculated correction weight.

In addition, the directional coupler is a starting point of the antenna correction link (the downlink correction receiving link and the uplink correction transmission link). In practical applications, N channels have N uncombined antenna correction link parts coming out of the directional coupler. The N uncombined antenna correction link parts have an amplitude and phase difference, which also may be tested, that is, measured through the inspection hole in Embodiment one and the test point shown in the figures. Either of the above amplitude and phase differences may be superimposed on the calculated correction coefficient to optimize a correction coefficient calculation result. An optimal scheme is to superimpose the above two amplitude and phase differences simultaneously to optimize the correction coefficient calculation result.

Therefore, in step A600 of this embodiment, the calculating, by the DSP, a first correction coefficient according to the first correction signal includes: calculating an initial first correction coefficient according to the first correction signal; and superimposing the initial first correction coefficient on an amplitude and phase difference value of the corresponding antenna channel to obtain the first correction coefficient.

The amplitude and phase difference value is a first amplitude and phase difference value and/or a second amplitude and phase difference value (in some embodiments both the first amplitude and phase difference value and the second amplitude and phase difference value are included). The first amplitude and phase difference value is an amplitude and phase difference value between an antenna channel duplexer and an antenna part. The second amplitude and phase difference value is an amplitude and phase difference value of uncombined parts of the corresponding antenna correction link of each antenna channel.

In step B600 of this embodiment, the calculating, by the DSP, a second correction coefficient according to the second correction signal includes: calculating an initial second correction coefficient according to the second correction signal; and superimposing the initial second correction coefficient on an amplitude and phase difference value of the corresponding antenna channel to obtain the second correction coefficient.

The amplitude and phase difference value is a first amplitude and phase difference value and/or a second amplitude and phase difference value. The first amplitude and phase difference value is an amplitude and phase difference value between an antenna channel duplexer and an antenna part. The second amplitude and phase difference value is an amplitude and phase difference value of uncombined parts of the corresponding antenna correction link of each antenna channel.

### Embodiment three

This embodiment applies to a multi-antenna transceiver as described in the embodiments, but provides two antenna channel downlink feedback methods according to different feedback signals.
(1) The feedback signal includes at least one of the following: DPD backward collected data; and an FWD.

In this case, the embodiment provides an antenna channel downlink feedback method, including: coupling, by the interface relation module, the feedback signal from the downlink service channel into the antenna correction link;
sending, by the antenna correction link, the feedback signal to the DSP; and receiving, by the DSP, the feedback signal, calculating a DPD coefficient according to DPD forward collected data and the DPD backward collected data, and sending the DPD coefficient to the digital intermediate-frequency processing module; and determining a power state according to the FWD, and sending abnormal state information to a CPU of the multi-antenna transceiver. The DPD forward collected data is collected by the digital intermediate-frequency processing module from the corresponding downlink service channel and sent to the DSP.

In an FDD communication mode, the method is performed by a multi-antenna transceiver having an interface relation module including a first radio-frequency interface, a first directional coupler, a second radio-frequency interface and a second directional coupler. In this case, the coupling, by the interface relation module, the feedback signal from the downlink service channel into the antenna correction link includes: receiving, by the first directional coupler through an input port, the feedback signal from the downlink service channel; sending the feedback signal to the first radio-frequency interface by a straight-through output port, and coupling the feedback signal into the antenna correction link by the coupling output port; and sending, by the first radio-frequency interface, the received feedback signal to an antenna through a duplexer.

In a TDD communication mode, the method is performed by a multi-antenna transceiver having an interface relation module including a radio-frequency interface, a first two-to-one switch and a directional coupler. In this case, the coupling, by the interface relation module, the feedback signal from the downlink service channel into the antenna correction link includes: placing a first selection terminal of the first two-to-one switch at a fixed terminal, and sending the feedback signal from the downlink service channel to the directional coupler; receiving, by the directional coupler through a first port, the feedback signal, sending the feedback signal to the radio-frequency interface by a second port, and coupling the feedback signal into the antenna correction link by a third port; and
sending, by the radio-frequency interface, the received feedback signal to an antenna through a duplexer.

In this embodiment, the sending, by the antenna correction link, the feedback signal to the DSP includes, but is not limited to, receiving the feedback signal from the corresponding interface relation module of each antenna channel; attenuating the feedback signal according to a second preset attenuation amplitude, where since the feedback signal is transmitted in a single-channel loop and thus small in the downlink feedback, the attenuation amplitude in this case may be small to ensure that the attenuated feedback signal does not exceed an ADDA converter threshold; the second preset attenuation amplitude in this embodiment is less than the first preset attenuation amplitude in Embodiment two; and performing digital-to-analog conversion on the attenuated downlink signal, and sending the signal to the DSP.

(2) The feedback signal includes at least one of the following: DPD backward collected data; an FWD; and an REV.

In this case, this embodiment provides an antenna channel downlink feedback method, including: sending, by the interface relation module, the feedback signal from the downlink service channel to the antenna correction link;
sending, by the antenna correction link, the feedback signal to the DSP; and receiving, by the DSP, the feedback signal, calculating a DPD coefficient according to DPD forward collected data and the DPD backward collected data, and sending the DPD coefficient to the digital intermediate-frequency processing module; determining a power state according to the FWD, and sending abnormal state information to a CPU of the multi-antenna transceiver; and determining a standing-wave state according to the REV, and sending abnormal state information to the CPU of the multi-antenna transceiver; where the DPD forward collected data is collected from the corresponding downlink service channel by the digital intermediate-frequency processing module and sent to the DSP.

In an FDD communication mode, the method is performed by a multi-antenna transceiver having an interface relation module including a first radio-frequency interface, a second radio-frequency interface, a first directional coupler, a second directional coupler, an attenuator, a circulator and a three-to-one switch. In this case, the coupling, by the interface relation module, the feedback signal from the downlink service channel into the antenna correction link includes: receiving, by the circulator, the feedback signal from the downlink service channel; sending the REV in the feedback signal to the attenuator, and sending the DPD backward collected data and/or the FWD to the first directional coupler; attenuating, by the attenuator, the REV to a preset value, and sending the REV to the three-to-one switch; receiving, by the first directional coupler through an input port, the DPD backward collected data and/or the FWD, sending the DPD backward collected data and/or the FWD to the first radio-frequency interface by a straight-through output port, and coupling the DPD backward collected data and/or the FWD into the three-to-one switch by a coupling output port; sending, by the first radio-frequency interface, the DPD backward collected data and/or the FWD to the antenna through the duplexer; and placing a first selection terminal of the three-to-one switch at a fixed terminal, and sending the received REV to the antenna correction link; placing a second selection terminal at the fixed terminal, sending the received DPD backward collected data and/or FWD to the antenna correction link; and placing a third selection terminal at the fixed terminal, and connecting a load, until downlink feedback is completed for all the antenna channels.

In a TDD communication mode, the method is performed by a multi-antenna transceiver having an interface relation module including a radio-frequency interface, a directional coupler, an attenuator, a circulator, a three-to-one switch and a first two-to-one switch. In this case, the coupling, by the interface relation module, the feedback signal from the downlink service channel into the antenna correction link includes: receiving, by the circulator, the feedback signal from the downlink service channel; and sending the REV to the first two-to-one switch, and sending the DPD backward collected data and/or the FWD to the directional coupler; placing a first selection terminal of the first two-to-one switch at a fixed terminal, and sending the received REV to the attenuator;attenuating, by the attenuator, the REV to a preset value, and sending the REV to the three-to-one switch;receiving, by the directional coupler through a first port, the DPD backward collected data and/or the FWD, sending the DPD backward collected data and/or the FWD to the radio-frequency interface by a second port, and coupling the DPD backward collected data and/or the FWD into the three-to-one switch by a third port; sending, by the radio-frequency interface, the DPD backward collected data and/or the FWD to the antenna through the duplexer; and placing a first selection terminal of the three-to-one switch at a fixed terminal, and sending the received REV to the antenna correction link; placing a second selection terminal at the fixed terminal, sending the DPD backward collected data and/or the FWD to the antenna correction link; and placing a third selection terminal at the fixed terminal, and connecting a load, until downlink feedback is completed for all the antenna channels.

In this embodiment, the sending, by the antenna correction link, the feedback signal to the DSP includes, but is not limited to, receiving the REV from the corresponding interface relation module of each antenna channel;attenuating the REV according to a second preset attenuation amplitude; and performing digital-to-analog conversion on the attenuated REV, and sending the REV to the DSP; or, receiving the DPD backward collected data and/or the FWD from the corresponding interface relation module of each antenna channel; attenuating the DPD backward collected data and/or the FWD according to a second preset attenuation amplitude; and performing digital-to-analog conversion on the attenuated DPD backward collected data and/or FWD, and sending the DPD backward collected data and/or the FWD to the DSP

Thus, the DPD backward collected data and/or the FWD in the feedback signal are/is simultaneously coupled into the antenna correction link. The REV does not enter the antenna correction link simultaneously with the DPD backward collected data and/or the FWD. Which of the DPD backward collected data and/or the FWD and the REV first enters the antenna correction link is not limited in this embodiment. Which of the two enters first depends on a control order in which three selection terminals of the three-to-one switch of the interface relation module are placed at the fixed terminal.

### Embodiment four

This embodiment provides a control method applied to the multi-antenna transceiver described in Embodiment one, including a control process for implementing the antenna channel correction method as described in Embodiment two, and including antenna channel downlink correction and antenna channel uplink correction. When the IQ switch module receives, from the BBU, a downlink service signal modulated with antenna correction signaling (including an instruction for antenna correction), the control method starts.

The control method applied to the multi-antenna transceiver described in Embodiment one according to this embodiment further includes a control process for implementing the antenna channel downlink feedback method as described in Embodiment three.

In this embodiment, correction between antenna channels is performed simultaneously for multiple antenna channels. The antenna channel downlink feedback is performed on a downlink of each antenna channel one by one. That is, the control method includes: controlling multiple antenna channels to perform antenna channel downlink correction simultaneously and controlling the multiple antenna channels to perform antenna channel downlink feedback one by one in an antenna channel downlink direction; and controlling the multiple antenna channels to perform antenna channel uplink correction simultaneously in an antenna channel uplink direction.

Further, the controlling multiple antenna channels to perform antenna channel downlink correction simultaneously and controlling the multiple antenna channels to perform antenna channel downlink feedback one by one in an antenna channel downlink direction includes: performing downlink correction periodically on an antenna channel downlink, where the downlink correction includes the antenna channel downlink correction and the antenna channel downlink feedback; a cycle of the downlink correction includes a preset number of downlink feedback loops and one antenna channel downlink correction; and the downlink feedback loop is one antenna channel downlink feedback completed by all the antenna channels one by one.

The controlling the multiple antenna channels to perform antenna channel uplink correction simultaneously in an antenna channel uplink direction includes performing the antenna channel uplink correction periodically on an antenna channel uplink.

In terms of antenna correction, the IQ switch module 10, the interface relation module 30, the antenna correction link 40 and the DSP 50 realize the antenna correction and acquire the correction coefficient of each antenna channel. In terms of downlink antenna channel (downlink) feedback, the IQ switch module 10, the interface relation module 30, the antenna correction link 40 and the DSP 50 acquire the DPD coefficient, the abnormal power state and/or abnormal standing-wave state. Thus, the realization of the antenna correction and feedback for the downlink antenna channel shares the above modules, and the antenna correction and feedback are not performed simultaneously. Therefore, in a cycle of the downlink link correction, an operation time sequence of the antenna channel downlink correction and the antenna channel downlink feedback is: completing a preset number of downlink feedback loops and then performing the antenna channel downlink correction once, or first performing the antenna channel downlink correction once and then completing a preset number of downlink feedback loops, which is not limited in this embodiment. The feedback of each antenna channel includes an REV feedback state, a DPD and FWD feedback state and a load state. The antenna channel feedback is performed on a downlink of each antenna channel one by one. Therefore, when one antenna channel is in the REV feedback state or the DPD and FWD feedback state, the other antenna channels are in the load state.

Since feedback of related signals is not required on the antenna channel uplink, it is only necessary to perform antenna correction cyclically when the uplink service is normal. Therefore, an operation time sequence of the uplink antenna correction is: performing uplink antenna correction once every preset time.

The operation time sequence of this embodiment is described below with reference to the drawings.

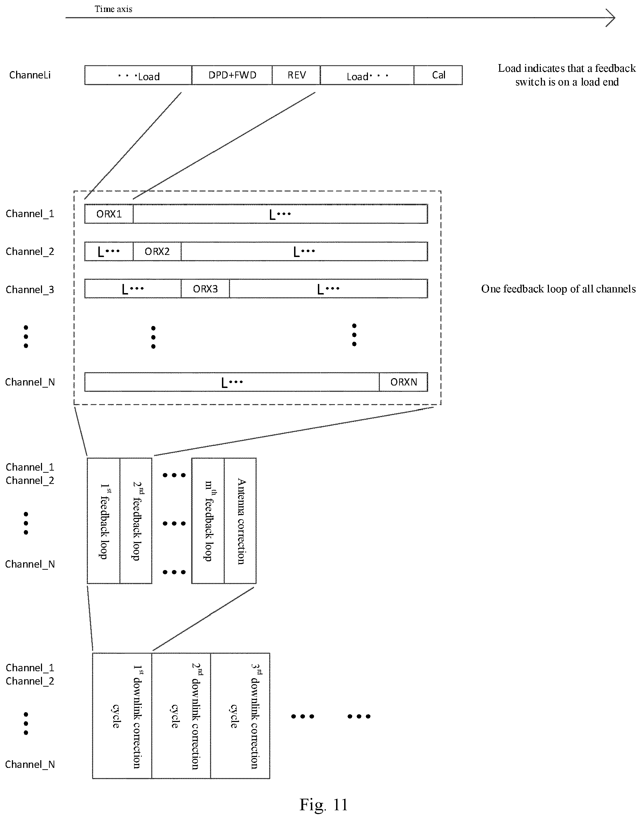

FIG. 11 is a schematic diagram of an operation time sequence of an antenna channel downlink. The horizontal axis is a time axis, Channel_i indicates an i^{th} antenna channel, and i is a positive integer less than or equal to N. Channel_i in the first row indicates feedback and antenna correction states, including: an REV feedback state, a DPD and FWD feedback state, a load state and an antenna correction state CAL.

When the antenna channel Channel_i is in the REV feedback state or the DPD and FWD feedback state, the other antenna channels are in the load state. When feedback of N antenna channels has been performed one by one, a feedback loop is completed. After a preset number m of feedback loops are performed, antenna correction is performed once. In this way, m feedback loops and one antenna correction form a downlink correction cycle. The whole downlink correction cycle is continuous, while in a TDD mode, the downlink correction cycle is continuous in a TX time slot.

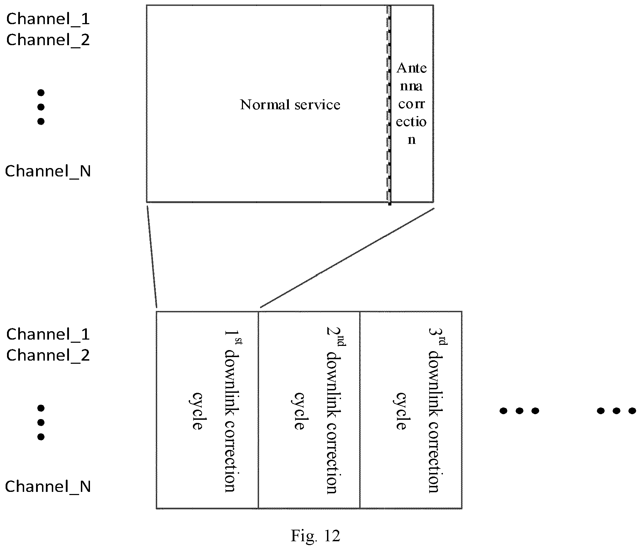

FIG. 12 is a schematic diagram of an operation time sequence of an antenna channel uplink. Since feedback of related signals is not required on the antenna channel uplink, it is only necessary to perform antenna correction cyclically when the uplink service is normal. Therefore, an operation time sequence of the uplink antenna correction is: performing uplink antenna correction once every preset time. Only an uplink service signal exists in the preset time. In this way, the preset time and one antenna correction form an uplink correction cycle. The whole uplink correction cycle is continuous, while in a TDD mode, the uplink correction cycle is continuous in an RX time slot.

According to an embodiment of the present invention, a base station is further provided, including a BBU and an RRU, and further including the multi-antenna transceiver as described in Embodiment one.

In addition, according to an embodiment of the present invention, a computer-readable storage medium is further provided. The computer-readable storage medium stores computer-executable instructions which, when executed by a processor or controller, cause the processor or controller to carry out the antenna channel correction method according to Embodiment two, the antenna channel downlink feedback method according to Embodiment three or the control method of a multi-antenna transceiver according to Embodiment four.

According to the embodiments of the present invention, an antenna correction signal link is shortened and separated from a baseband processing part, and the procedures are wholly completed by a transceiver board, so that debugging, use and maintenance of antenna correction functions no longer require cross-section collaboration, efficiency and reliability are improved, and transmission resources of carrier signals and baseband are saved.

Those having ordinary skills in the art may understand that all or some of the steps in the method and the system disclosed above may be implemented as software, firmware, hardware and appropriate combinations thereof. Some or all of the physical components may be implemented as software executed by a processor such as a central processing unit, a digital signal processor or a microprocessor, or may be implemented as hardware, or may be implemented as an integrated circuit such as an application-specific integrated circuit. Such software may be distributed on a computer-readable medium, which may include a computer storage medium (or non-transitory medium) and a communication medium (or a transitory medium). As is well known to those having ordinary skills in the art, the term "computer storage medium" includes volatile and nonvolatile, removable and non-removable media implemented in any method or technology for storing information (such as computer-readable instructions, data structures, program modules, or other data). The computer storage medium includes, but is not limited to, an RAM, a read-only memory (ROM), an electrically erasable programmable read-only memory (EEPROM), a flash memory or other memory technologies, a compact disc read-only memory (CD-ROM), a digital versatile disk (DVD) or other optical storage, magnetic cassette, magnetic tape, magnetic disk storage or other magnetic storage apparatuses, or any other media that can be configured for storing desired information and can be accessed by a computer. Besides, as is well known to those having ordinary skills in the art, the communication medium typically includes computer-readable instructions, data structures, program modules or other data in a modulated data signal such as a carrier wave or other transport mechanisms, and may include any information delivery medium.

The above is a detailed description of some embodiments of the present invention, but the present application is not limited thereto. Those having ordinary skills in the art may also make various equivalent transformations or replacements without departing from the protection scope of the present invention, which are all included in the scope defined by the claims of the present invention.

## Claims

1. A multi-antenna transceiver, comprising an In-phase/Quadrature (IQ) switch module, a digital intermediate-frequency processing module, an interface relation module, an antenna correction link and a digital signal processor (DSP), wherein
the DSP is configured to generate a first correction signal and send the first correction signal to the IQ switch module;
the IQ switch module is configured to send the received first correction signal to the digital intermediate-frequency processing module of an antenna channel;
the digital intermediate-frequency processing module is configured to send the received first correction signal to a downlink service channel;
the interface relation module is configured to couple the first correction signal from the downlink service channel into the antenna correction link;
the antenna correction link is configured to send the received first correction signal to the DSP;
the DSP is configured to calculate a first correction coefficient according to the received first correction signal and send the first correction coefficient to the IQ switch module, and the IQ switch module is configured to send the first correction coefficient to a Baseband Processing Unit (BBU); or
the DSP is further configured to generate a second correction signal and send the second correction signal to the antenna correction link;
the antenna correction link is further configured to send the received second correction signal to the interface relation module of the antenna channel;
the interface relation module is further configured to couple the received second correction signal into an uplink service channel;
the digital intermediate-frequency processing module is further configured to receive the second correction signal from the uplink service channel and send the second correction signal to the IQ switch module;
the IQ switch module is further configured to send the received second correction signal to the DSP; and
the DSP is further configured to calculate a second correction coefficient according to the received second correction signal and send the second correction coefficient to the IQ switch module which is configured to send the second correction coefficient to the BBU.

2. The multi-antenna transceiver of claim 1, wherein
the IQ switch module is further configured to receive, from the BBU, a downlink service signal modulated with antenna correction signaling, insert the first correction signal received from the DSP into the downlink service signal, and send a downlink signal comprising the downlink service signal and the first correction signal to the digital intermediate-frequency processing module; or
the IQ switch module is further configured to receive an uplink signal from the digital intermediate-frequency processing module; send the uplink signal to the DSP, insert a correction coefficient received from the DSP into the uplink signal in a signaling form, and send the uplink signal to the BBU;
wherein the uplink signal comprises an uplink service signal and the second correction signal; and the correction coefficient is the first correction coefficient or the second correction coefficient.

3. The multi-antenna transceiver of claim 1, wherein the interface relation module is further configured to couple a feedback signal from the downlink service channel into the antenna correction link; wherein the feedback signal comprises at least one of the following:
digital pre-distortion (DPD) backward collected data; and
a forward power detection signal (FWD);
the antenna correction link is configured to send the feedback signal to the DSP; and
the DSP is further configured to receive the feedback signal; calculate a DPD coefficient according to DPD forward collected data and the DPD backward collected data, and send the DPD coefficient to the digital intermediate-frequency processing module; determine a power state according to the FWD, and send abnormal state information to a CPU of the multi-antenna transceiver;
wherein the DPD forward collected data is collected from a corresponding downlink service channel by the digital intermediate-frequency processing module and sent to the DSP.

4. The multi-antenna transceiver of claim 3, wherein in a frequency division duplex (FDD) communication mode, the interface relation module comprises a first radio-frequency interface, a first directional coupler, a second radio-frequency interface and a second directional coupler;
in an antenna channel downlink direction,
the first directional coupler is configured to receive, by an input port, a downlink signal from the downlink service channel; send the downlink signal to the first radio-frequency interface through a straight-through output port, and couple the downlink signal into the antenna correction link through a coupling output port; wherein the downlink signal comprises a downlink service signal and the first correction signal; and
the first radio-frequency interface is configured to send the received downlink signal to an antenna through a duplexer;
or
the first directional coupler is further configured to receive, by the input port, the feedback signal from the downlink service channel; send the feedback signal to the first radio-frequency interface through the straight-through output port, and couple the feedback signal into the antenna correction link through the coupling output port; and
the first radio-frequency interface is further configured to send the received feedback signal to the antenna through the duplexer;
or
in an antenna channel uplink direction,
the second radio-frequency interface is configured to receive, from the duplexer, an uplink service signal from an antenna and send the uplink service signal; and
the second directional coupler is configured to receive, by an isolation port, the uplink service signal from the second radio-frequency interface and send the uplink service signal to a coupling output port; receive, by an input port, the second correction signal from the antenna correction link, and couple the second correction signal to the coupling output port to be superimposed with the uplink service signal so as to be combined into an uplink signal; and send the uplink signal to the uplink service channel through the coupling output port.

5. The multi-antenna transceiver of claim 3, wherein in a time division duplex (TDD) communication mode, the interface relation module comprises a radio-frequency interface, a first two-to-one switch and a directional coupler;
in an antenna channel downlink direction,
the first two-to-one switch is configured to receive, by a first selection terminal, a downlink signal from the downlink service channel and send the downlink signal to the directional coupler through a fixed terminal; wherein the downlink signal comprises a downlink service signal and the first correction signal;
the directional coupler is configured to receive the downlink signal by a first port, send the downlink signal to the radio-frequency interface through a second port, and couple the downlink signal into the antenna correction link through a third port; and
the radio-frequency interface is configured to send the received downlink signal to an antenna through a duplexer;
or
the first two-to-one switch is further configured to receive, by the first selection terminal, the feedback signal from the downlink service channel and send the feedback signal to the directional coupler through the fixed terminal;
the directional coupler is further configured to receive the feedback signal by the first port, send the feedback signal to the radio-frequency interface through the second port, and couple the feedback signal into the antenna correction link through the third port; and
the radio-frequency interface is further configured to send the received feedback signal to the antenna through the duplexer;
or
in an antenna channel uplink direction,
the radio-frequency interface is further configured to receive, from the duplexer, an uplink service signal from an antenna and send uplink service signal;
the directional coupler is further configured to receive, by the second port, the uplink service signal from the radio-frequency interface and send the uplink service signal to the first port; receive, by the third port, the second correction signal from the antenna correction link, and couple the second correction signal to the first port to be superimposed with the uplink service signal so as to be combined into an uplink signal; and send the uplink signal through the first port; and
the first two-to-one switch is further configured to receive, by the fixed terminal, the uplink signal from the directional coupler and send the uplink signal to the uplink service channel through a second selection terminal.

6. The multi-antenna transceiver of claim 1, wherein the interface relation module is further configured to send a feedback signal from the downlink service channel to the antenna correction link; wherein the feedback signal comprises at least one of the following:
DPD backward collected data;
an FWD; and
a standing-wave detection signal (REV);
the antenna correction link is further configured to send the feedback signal to the DSP; and
the DSP is further configured to receive the feedback signal; calculate a DPD coefficient according to DPD forward collected data and the DPD backward collected data, and send the DPD coefficient to the digital intermediate-frequency processing module; determine a power state according to the FWD, and send abnormal state information to a CPU of the multi-antenna transceiver; and/or determine a standing-wave state according to the REV, and send abnormal state information to the CPU of the multi-antenna transceiver;
wherein the DPD forward collected data is collected from the corresponding downlink service channel by the digital intermediate-frequency processing module and sent to the DSP.

7. The multi-antenna transceiver of claim 6, wherein in an FDD communication mode, the interface relation module comprises a first radio-frequency interface, a second radio-frequency interface, a first directional coupler, a second directional coupler, an attenuator, a circulator and a three-to-one switch;
in an antenna channel downlink direction,
the circulator is configured to receive a downlink signal from the downlink service channel and send the downlink signal to the first directional coupler, wherein the downlink signal comprises a downlink service signal and the first correction signal;
the first directional coupler is configured to receive the downlink signal by an input port, send the downlink signal to the first radio-frequency interface through a straight-through output port, and couple the downlink signal into the three-to-one switch through a coupling output port;
the first radio-frequency interface is configured to send the received downlink signal to an antenna through a duplexer; and
the three-to-one switch is configured to receive the downlink signal by a second selection terminal and send the downlink signal to the antenna correction link through a fixed terminal;
or
the circulator is further configured to receive the feedback signal from the downlink service channel; send the REV to the attenuator, and send the DPD backward collected data and/or the FWD to the first directional coupler;
the attenuator is further configured to attenuate the received REV to a preset value and send the REV to the three-to-one switch;
the first directional coupler is further configured to receive the DPD backward collected data and/or the FWD from the input port, send the DPD backward collected data and/or the FWD to the first radio-frequency interface through the straight-through output port, and couple the DPD backward collected data and/or the FWD into the three-to-one switch through the coupling output port;
the first radio-frequency interface is further configured to send the received DPD backward collected data and/or FWD to the antenna through the duplexer; and
the three-to-one switch is further configured to receive, by a first selection terminal, the REV from the attenuator, and send the REV to the antenna correction link through the fixed terminal; or receive, by the second selection terminal, the DPD backward collected data and/or the FWD from the first directional coupler, and send the DPD backward collected data and/or the FWD to the antenna correction link through the fixed terminal; or connect a load through a third selection terminal;
or
in an antenna channel uplink direction,
the second radio-frequency interface is configured to receive, from the duplexer, an uplink service signal from an antenna and send uplink service signal; and
the second directional coupler is configured to receive, by an isolation port, the uplink service signal from the second radio-frequency interface and send the uplink service signal to the coupling output port; receive, by an input port, the second correction signal from the antenna correction link, and couple the second correction signal to the coupling output port to be superimposed with the uplink service signal so as to be combined into an uplink signal; and send the uplink signal to the uplink service channel through the coupling output port.

8. The multi-antenna transceiver of claim 6, wherein in a TDD communication mode, the interface relation module comprises a radio-frequency interface, a directional coupler, an attenuator, a circulator, a three-to-one switch and a first two-to-one switch;
in an antenna channel downlink direction,
the circulator is configured to receive a downlink signal from the downlink service channel and send the downlink signal to the directional coupler; wherein the downlink signal comprises a downlink service signal and the first correction signal;
the directional coupler is configured to receive the downlink signal by a first port, send the downlink signal to the radio-frequency interface through a second port, and couple the downlink signal into the three-to-one switch through a third port; and
the radio-frequency interface is configured to send the received downlink signal to an antenna through a duplexer;
the three-to-one switch is configured to receive the downlink signal by a second selection terminal and send the downlink signal to the antenna correction link through a fixed terminal;
or
the circulator is further configured to receive the feedback signal from the downlink service channel; send the REV to the first two-to-one switch, and send the DPD backward collected data and/or the FWD to the directional coupler;
the first two-to-one switch is configured to receive the REV from a fixed terminal and send the REV to the attenuator through a first selection terminal;
the attenuator is configured to attenuate the received REV to a preset value and send the REV to the three-to-one switch;
the directional coupler is further configured to receive the DPD backward collected data and/or the FWD by the first port, send the DPD backward collected data and/or the FWD to the radio-frequency interface through the second port, and couple the DPD backward collected data and/or the FWD to the three-to-one switch through the third port;
the radio-frequency interface is further configured to send the received DPD backward collected data and/or FWD to the antenna through the duplexer; and
the three-to-one switch is further configured to receive the REV by a first selection terminal, and send the REV to the antenna correction link through the fixed terminal; or receive the DPD backward collected data and/or the FWD from the second selection terminal, and send the DPD backward collected data and/or the FWD to the antenna correction link through the fixed terminal; or connect a load through a third selection terminal;
or
in an antenna channel uplink direction,
the radio-frequency interface is further configured to receive, from the duplexer, an uplink service signal from an antenna and send the uplink service signal;
the three-to-one switch is further configured to receive, by the fixed terminal, the second correction signal from the antenna correction link and send second correction signal through the second selection terminal;
the directional coupler is further configured to receive, by the second port, the uplink service signal from the radio-frequency interface and send the uplink service signal to the first port; receive, by the third port, the second correction signal from the three-to-one switch, and couple the second correction signal to the first port to be superimposed with the uplink service signal so as to be combined into an uplink signal; and send the uplink signal through the first port; and
the circulator is further configured to receive the uplink signal from the directional coupler and send the uplink signal; and
the first two-to-one switch is further configured to receive, by the fixed terminal, the uplink signal from the circulator and send it to the uplink service channel through the second selection terminal.

9. The multi-antenna transceiver of claim 3 or 6, wherein the antenna correction link comprises a combination unit, a digitally controlled attenuator and an ADDA converter;
in an antenna channel downlink direction,
the combination unit is configured to receive a downlink signal from a corresponding interface relation module of each antenna channel, combine the downlink signals into one channel, and send the singal to a downlink correction receiving link; wherein the downlink signal comprises a downlink service signal and the first correction signal;
the digitally controlled attenuator is configured to attenuate the downlink signal from the downlink correction receiving link and send the downlink signal; and
the ADDA converter is configured to perform digital-to-analog conversion on the downlink signal from the digitally controlled attenuator and send the downlink signal to the DSP;
or
the combination unit is further configured to receive the feedback signal from the corresponding interface relation module of each antenna channel and send the feedback signal to the downlink correction receiving link;
the digitally controlled attenuator is further configured to attenuate the feedback signal from the downlink correction receiving link and send the feedback signal; and
the ADDA converter is further configured to perform digital-to-analog conversion on the feedback signal from the digitally controlled attenuator and send the feedback signal to the DSP;
or
in an antenna channel uplink direction,
the ADDA converter is further configured to perform analog-to-digital conversion on the second correction signal from the DSP and send the second correction signal to an uplink correction transmission link; and
the combination unit is further configured to divide the second correction signal from the uplink correction transmission link into multiple channels, and send the signals to the corresponding interface relation module of each antenna channel.

10. The multi-antenna transceiver of claim 9, wherein the digitally controlled attenuator attenuates the downlink signal according to a first preset attenuation amplitude, and attenuates the feedback signal according to a second preset attenuation amplitude.

11. The multi-antenna transceiver of claim 9, wherein the antenna correction link further comprises:
an inspection hole that is an external interface; and
a power divider or coupler configured to connect the inspection hole to the antenna correction link between the combination unit and the downlink correction receiving link or between the combination unit and the uplink correction transmission link.

12. Abase station, comprising the multi-antenna transceiver of any one of claims 1 to 11.

13. A control method of the multi-antenna transceiver of any one of claims 1 to 11, comprising:
antenna channel downlink correction,
sending, by the DSP, a generated first correction signal to the IQ switch module;
sending, by the IQ switch module, the first correction signal to the digital intermediate-frequency processing module of the antenna channel;
sending, by the digital intermediate-frequency processing module, the first correction signal to the downlink service channel;
coupling, by the interface relation module, the first correction signal from the downlink service channel to the antenna correction link;
sending, by the antenna correction link, the first correction signal to the DSP; and
calculating, by the DSP, a first correction coefficient according to the first correction signal, and sending, by the IQ switch module, the first correction coefficient to the BBU;
or
antenna channel uplink correction,
sending, by the DSP, a generated second correction signal to the antenna correction link;
sending, by the antenna correction link, the second correction signal to the interface relation module; and
coupling, by the interface relation module, the second correction signal to the uplink service channel;
receiving, by the digital intermediate-frequency processing module, the second correction signal from the uplink service channel and sending the second correction signal to the IQ switch module;
sending, by the IQ switch module, the second correction signal to the DSP; and
calculating, by the DSP, a second correction coefficient according to the second correction signal, and sending, by the IQ switch module, the second correction coefficient to the BBU.

14. The control method of claim 13, wherein the sending, by the IQ switch module, the first correction signal to the digital intermediate-frequency processing module of the antenna channel comprises:
receiving, from the BBU, a downlink service signal modulated with antenna correction signaling; and
inserting the first correction signal received from the DSP into the downlink service signal, and sending a downlink signal comprising the downlink service signal and the first correction signal to the digital intermediate-frequency processing module.

15. The control method of claim 13, wherein the sending, by the IQ switch module, the second correction signal to the DSP comprises:
receiving an uplink signal from the digital intermediate-frequency processing module; wherein the uplink signal comprises an uplink service signal and the second correction signal; and
sending the uplink signal to the DSP, inserting a correction coefficient received from the DSP into the uplink signal in a signaling form, and sending the uplink signal to the BBU; wherein the correction coefficient is the first correction coefficient or the second correction coefficient.

16. The control method of claim 13, wherein the sending, by the antenna correction link, the first correction signal to the DSP comprises:
receiving a downlink signal from a corresponding interface relation module of each antenna channel, and combining the downlink signals into one channel; wherein the downlink signal comprises a downlink service signal and the first correction signal;
attenuating, according to a first preset attenuation amplitude, the combined-into-one-channel downlink signal; and
performing digital-to-analog conversion on the attenuated downlink signal, and sending the attenuated downlink signal to the DSP.

17. The control method of claim 13, wherein the sending, by the antenna correction link, the second correction signal to the interface relation module comprises:
performing analog-to-digital conversion on the second correction signal from the DSP; and
dividing the second correction signal after analog-to-digital conversion into N channels, and sending the signals to the corresponding interface relation module of each antenna channel; wherein N is a number of antenna channels.

18. The control method of claim 13, wherein the calculating, by the DSP, a first correction coefficient according to the first correction signal comprises:
calculating an initial first correction coefficient according to the first correction signal; and
superimposing the initial first correction coefficient with an amplitude and phase difference value of the corresponding antenna channel to obtain the first correction coefficient;
wherein the amplitude and phase difference value is a first amplitude and phase difference value and/or a second amplitude and phase difference value; the first amplitude and phase difference value is an amplitude and phase difference value between an antenna channel duplexer and an antenna part; and the second amplitude and phase difference value is an amplitude and phase difference value of uncombined parts of the corresponding antenna correction link of each antenna channel.

19. The control method of claim 13, wherein the calculating, by the DSP, a second correction coefficient according to the second correction signal comprises:
calculating an initial second correction coefficient according to the second correction signal; and
superimposing the initial second correction coefficient with an amplitude and phase difference value of the corresponding antenna channel to obtain the second correction coefficient;
wherein the amplitude and phase difference value is a first amplitude and phase difference value and/or a second amplitude and phase difference value; the first amplitude and phase difference value is an amplitude and phase difference value between an antenna channel duplexer and an antenna part; and the second amplitude and phase difference value is an amplitude and phase difference value of uncombined parts of the corresponding antenna correction link of each antenna channel.

20. The control method of claim 13, further comprising antenna channel downlink feedback; the antenna channel downlink feedback comprising:
coupling, by the interface relation module, a feedback signal from the downlink service channel into the antenna correction link; wherein the feedback signal comprises at least one of the following:
DPD backward collected data;
an FWD;
sending, by the antenna correction link, the feedback signal to the DSP; and
receiving, by the DSP, the feedback signal, calculating a DPD coefficient according to DPD forward collected data and the DPD backward collected data, and sending the DPD coefficient to the digital intermediate-frequency processing module; determining a power state according to the FWD, and sending abnormal state information to a CPU of the multi-antenna transceiver;
wherein the DPD forward collected data is collected from the corresponding downlink service channel by the digital intermediate-frequency processing module and sent to the DSP.

21. The control method of claim 20, wherein in an FDD communication mode, the coupling, by the interface relation module, the first correction signal from the downlink service channel to the antenna correction link comprises:
receiving, by the first directional coupler through an input port, a downlink signal from the downlink service channel; sending the downlink signal to the first radio-frequency interface through a straight-through output port, and coupling the downlink signal into the antenna correction link through a coupling output port; wherein the downlink signal comprises a downlink service signal and the first correction signal; and
sending, by the first radio-frequency interface, the received downlink signal to an antenna through a duplexer.

22. The control method of claim 20, wherein in an FDD communication mode, the coupling, by the interface relation module, the second correction signal to the uplink service channel comprises:
receiving, by the second radio-frequency interface, from the duplexer, an uplink service signal from an antenna and sending the uplink service signal to the second directional coupler; and
receiving, by the second directional coupler through an isolation port, the uplink service signal, and sending the uplink service signal to a coupling output port; receiving, by an input port, the second correction signal from the antenna correction link, and coupling the second correction signal to the coupling output port to be superimposed with the uplink service signal so as to be combined into an uplink signal; and sending the uplink signal to the uplink service channel through the coupling output port.

23. The control method of claim 20, wherein in an FDD communication mode, the coupling, by the interface relation module, a feedback signal from the downlink service channel into the antenna correction link comprises:
receiving, by a first directional coupler through an input port, the feedback signal from the downlink service channel; sending the feedback signal to the first radio-frequency interface through a straight-through output port, and coupling the feedback signal into the antenna correction link through a coupling output port; and
sending, by the first radio-frequency interface, the received feedback signal to an antenna through a duplexer.

24. The control method of claim 20, wherein in a TDD communication mode, the coupling, by the interface relation module, the first correction signal from the downlink service channel to the antenna correction link comprises:
placing a first selection terminal of the first two-to-one switch at a fixed terminal, and sending a downlink signal from the downlink service channel to a directional coupler; wherein the downlink signal comprises a downlink service signal and the first correction signal;
receiving, by the directional coupler through a first port, the downlink signal, sending the downlink signal to the radio-frequency interface through a second port, and coupling the downlink signal into the antenna correction link through a third port; and
sending, by the radio-frequency interface, the received downlink signal to an antenna through a duplexer.

25. The control method of claim 20, wherein in a TDD communication mode, the coupling, by the interface relation module, the second correction signal to the uplink service channel comprises:
receiving, by the radio-frequency interface, from a duplexer, an uplink service signal from an antenna, and sending the uplink service signal to a directional coupler; and
receiving, by the directional coupler through a second port, the uplink service signal, and sending the uplink service signal to a first port; receiving, by a third port, the second correction signal from the antenna correction link, and coupling the second correction signal to the first port to be superimposed with the uplink service signal so as to be combined into an uplink signal; and sending the uplink signal to the first two-to-one switch through the first port; and
placing a second selection terminal of the first two-to-one switch at a fixed terminal, and sending the uplink signal from the directional coupler to the uplink service channel.

26. The control method of claim 20, wherein in a TDD communication mode, the coupling, by the interface relation module, a feedback signal from the downlink service channel into the antenna correction link comprises:
placing a first selection terminal of a first two-to-one switch at a fixed terminal, and sending the feedback signal from the downlink service channel to a directional coupler;
receiving, by the directional coupler through a first port, the feedback signal, sending the feedback signal to the radio-frequency interface through a second port, and coupling the feedback signal into the antenna correction link through a third port; and
sending, by the radio-frequency interface, the received feedback signal to an antenna through a duplexer.

27. The control method of claim 20, wherein the sending, by the antenna correction link, the feedback signal to the DSP comprises:
receiving the feedback signal from the corresponding interface relation module of each antenna channel;
attenuating the feedback signal according to a second preset attenuation amplitude; and
performing digital-to-analog conversion on the attenuated feedback signal, and sending the feedback signal to the DSP.

28. The control method of claim 13, further comprising antenna channel downlink feedback; the antenna channel downlink feedback comprising:
coupling, by the interface relation module, a feedback signal from the downlink service channel into the antenna correction link; wherein the feedback signal comprises at least one of the following:
DPD backward collected data;
an FWD; and
an REV;
sending, by the antenna correction link, the feedback signal to the DSP; and
receiving, by the DSP, the feedback signal, calculating a DPD coefficient according to DPD forward collected data and the DPD backward collected data, and sending the DPD coefficient to the digital intermediate-frequency processing module; determining a power state according to the FWD, and sending abnormal state information to a CPU of the multi-antenna transceiver; determining a standing-wave state according to the REV, and sending abnormal state information to the CPU of the multi-antenna transceiver;
wherein the DPD forward collected data is collected from the corresponding downlink service channel by the digital intermediate-frequency processing module and sent to the DSP.

29. The control method of claim 28, wherein in an FDD communication mode, the coupling, by the interface relation module, the first correction signal from the downlink service channel to the antenna correction link comprises:
receiving, by a circulator, a downlink signal from the downlink service channel, and sending the downlink signal to a first directional coupler; wherein the downlink signal comprises a downlink service signal and the first correction signal;
receiving, by the first directional coupler through an input port, the downlink signal, sending the downlink signal to the first radio-frequency interface through a straight-through output port, and coupling the downlink signal into a three-to-one switch through a coupling output port;
sending, by the first radio-frequency interface, the downlink signal to an antenna through a duplexer; and
placing a second selection terminal of the three-to-one switch at a fixed terminal, and sending the downlink signal to the antenna correction link.

30. The control method of claim 28, wherein in an FDD communication mode, the coupling, by the interface relation module, the second correction signal to the uplink service channel comprises:
receiving, by the second radio-frequency interface, from a duplexer, an uplink service signal from an antenna, and sending the uplink service signal to the second directional coupler; and
receiving, by the second directional coupler through an isolation port, the uplink service signal, and sending the uplink service signal to a coupling output port; receiving, by an input port, the second correction signal from the antenna correction link, and coupling the second correction signal to the coupling output port to be superimposed with the uplink service signal so as to be combined into an uplink signal; and sending the uplink signal to the uplink service channel through the coupling output port.

31. The control method of claim 28, wherein in an FDD communication mode, the coupling, by the interface relation module, a feedback signal from the downlink service channel into the antenna correction link comprises:
receiving, by a circulator, the feedback signal from the downlink service channel; sending the REV to a attenuator, and sending the DPD backward collected data and/or the FWD to a first directional coupler;
attenuating, by the attenuator, the REV to a preset value, and sending the REV to a three-to-one switch;
receiving, by the first directional coupler through an input port, the DPD backward collected data and/or the FWD, sending the DPD backward collected data and/or the FWD to the first radio-frequency interface through a straight-through output port, and coupling the DPD backward collected data and/or the FWD into the three-to-one switch through a coupling output port;
sending, by the first radio-frequency interface, the DPD backward collected data and/or the FWD to an antenna through a duplexer; and
placing a first selection terminal of the three-to-one switch at a fixed terminal, and sending the REV to the antenna correction link; placing a second selection terminal at the fixed terminal, sending the DPD backward collected data and/or the FWD to the antenna correction link; placing a third selection terminal at the fixed terminal, and connecting a load.

32. The control method of claim 28, wherein in a TDD communication mode, the coupling, by the interface relation module, the first correction signal from the downlink service channel to the antenna correction link comprises:
receiving, by a circulator, a downlink signal from the downlink service channel, and sending the downlink signal to a directional coupler; wherein the downlink signal comprises a downlink service signal and the first correction signal;
receiving, by the directional coupler through a first port, the downlink signal, sending the downlink signal to the radio-frequency interface through a second port, and coupling the downlink signal into a three-to-one switch through a third port;
sending, by the radio-frequency interface, the downlink signal to an antenna through a duplexer; and
placing a second selection terminal of the three-to-one switch at a fixed terminal, and sending the downlink signal to the antenna correction link.

33. The control method of claim 28, wherein in a TDD communication mode, the coupling, by the interface relation module, the second correction signal to the uplink service channel comprises:
receiving, by a radio-frequency interface, from a duplexer, an uplink service signal from an antenna, and sending the uplink service signal to the directional coupler;
placing a second selection terminal of a three-to-one switch at a fixed terminal, and sending the second correction signal from the antenna correction link to the directional coupler;
receiving, by the directional coupler through a second port, the uplink service signal, and sending the uplink service signal to a first port; receiving the second correction signal from a third port, and coupling the second correction signal to the first port to be superimposed with the uplink service signal so as to be combined into an uplink signal; and sending the uplink signal to a circulator through the first port;
sending, by the circulator, the uplink signal to a first two-to-one switch; and
placing a second selection terminal of the first two-to-one switch at a fixed terminal, and sending the uplink signal to the uplink service channel.

34. The control method of claim 28, wherein in a TDD communication mode, the coupling, by the interface relation module, a feedback signal from the downlink service channel into the antenna correction link comprises:
receiving, by a circulator, the feedback signal from the downlink service channel; sending the REV to a first two-to-one switch, and sending the DPD backward collected data and/or the FWD to a directional coupler;
placing a first selection terminal of the first two-to-one switch at a fixed terminal, and sending the REV to the attenuator;
attenuating, by the attenuator, the REV to a preset value, and sending the REV to a three-to-one switch;
receiving, by the directional coupler through a first port, the DPD backward collected data and/or the FWD, sending the DPD backward collected data and/or the FWD to the radio-frequency interface through a second port, and coupling the DPD backward collected data and/or the FWD to the three-to-one switch through a third port;
sending, by the radio-frequency interface, the DPD backward collected data and/or the FWD to an antenna through a duplexer; and
placing a first selection terminal of the three-to-one switch at a fixed terminal, and sending the REV to the antenna correction link; placing a second selection terminal at the fixed terminal, sending the DPD backward collected data and/or the FWD to the antenna correction link; placing a third selection terminal at the fixed terminal, and connecting a load.

35. The control method of claim 28, wherein the sending, by the antenna correction link, the feedback signal to the DSP comprises:
receiving the REV from a corresponding interface relation module of each antenna channel;
attenuating the REV according to a second preset attenuation amplitude; and
performing digital-to-analog conversion on the attenuated REV, and sending the REV to the DSP;
or
receiving the DPD backward collected data and/or the FWD from a corresponding interface relation module of each antenna channel;
attenuating the DPD backward collected data and/or the FWD according to a second preset attenuation amplitude; and
performing digital-to-analog conversion on the attenuated DPD backward collected data and/or FWD, and sending the DPD backward collected data and/or the FWD to the DSP.

36. The control method of claim 20 or 28, wherein the control method comprises controlling multiple antenna channels to perform antenna channel downlink correction simultaneously and controlling the multiple antenna channels to perform antenna channel downlink feedback one by one in an antenna channel downlink direction; and
controlling the multiple antenna channels to perform antenna channel uplink correction simultaneously in an antenna channel uplink direction.

37. The control method of claim 36, wherein the controlling multiple antenna channels to perform antenna channel downlink correction simultaneously and controlling the multiple antenna channels to perform antenna channel downlink feedback one by one in an antenna channel downlink direction comprises:
performing downlink correction periodically on an antenna channel downlink; wherein the downlink correction comprises the antenna channel downlink correction and the antenna channel downlink feedback; a cycle of the downlink correction comprises a preset number of downlink feedback loops and one antenna channel downlink correction; and the downlink feedback loop is one antenna channel downlink feedback completed by all the antenna channels one by one.

38. The control method of claim 36, wherein the controlling the multiple antenna channels to perform antenna channel uplink correction simultaneously in an antenna channel uplink direction comprises:
performing the antenna channel uplink correction periodically on an antenna channel uplink.

39. A computer-readable storage medium, storing computer executable instructions which, when executed by a processor, cause the processor to carry out the control method of the multi-antenna transceiver of any one of claims 13 to 38.
